# EUROPEAN PATENT APPLICATION

(11) **EP 1 923 363 A2**
(43) Date of publication of application: **21.05.2008**
(21) Application number: 07021085.1
(22) Date of filing: 29.10.2007
(51) Int. Cl.: C03C 17/34, B05D 7/00, B32B 17/00

(54) **Hydrophilic member and substrate for hydrophilic member**

(30) Priority: 30.10.2006 JP 2006294813; 30.10.2006 JP 2006294854; 19.09.2007 JP 2007242318; 20.09.2007 JP 2007244115
(71) Applicant: FUJIFILM Corporation, Minato-ku Tokyo (JP)
(72) Inventor: Fukuda, Makoto, Ashigarakami-gun Kanagawa (JP); Hoshi, Satoshi, Ashigarakami-gun Kanagawa (JP)
(74) Representative: HOFFMANN EITLE

(57) **Abstract**

A hydrophilic member includes a base material, an undercoat layer and a hydrophilic layer, in this order, wherein (1) the undercoat layer contains a partial structure represented by the formula, M-OH in which M represents Si, Ti, Zr or A1 in which a surface of the undercoat layer has a value of M-OH/M of from 1 to 0.4 or (2) the undercoat layer contains a non-volatile catalyst.

## Description

### FIELD OF THE INVENTION

The present invention relates to a surface hydrophilic member and to a substrate for hydrophilic member. In particular, the invention relates to a surface hydrophilic member which is excellent in adhesion between a hydrophilic layer and a base material and excellent in durability with respect to the hydrophilic layer and to a substrate for hydrophilic member which can be used therefor.

### BACKGROUND OF THE INVENTION

Products or members having a resin film surface are used in a wide field and when worked and imparted with a function according to the purpose, are provided for the use. However, in general, their surfaces exhibit hydrophobicity or lipophilic properties due to original characteristics of a resin. Accordingly, when oils or the like as a staining substance attach to such a surface, there was a possibility that functions or characteristics of products or members having the subject surface are remarkably reduced. Also, with respect to products or members to be exposed to a high-humidity condition or rainfalls, there was a problem that in products or members having a transparent function, when droplets attach, the light transmittance is hindered due to irregular reflection of light. Even with respect to products or members having an inorganic surface such as glasses and metals, it could not be said that antifouling properties relative to the attachment of a staining substance such as oils are sufficient, and anti-fogging properties relative to the attachment of droplets were not sufficient. In particular, in automobile glasses and building glasses, there is often found the case where hydrophobic staining substances, for example, city soot and dust, combustion products to be contained in an exhaust gas of an automobile or the like, for example, carbon black, fats and oils and sealant eluting components attach, or the case where insurance of visibility through a glass is disturbed due to the attachment of droplets (in the case of a mirror, reflection occurs). Thus, it has been eagerly demanded to impart functions such as antifouling properties and anti-fogging properties.

From the viewpoint of antifouling properties, supposing that the staining substance is an organic substance such as oils, in order to prevent staining, it is needed to reduce a mutual action with the material surface, namely to make the material surface hydrophilic or oil repellent. Also, with respect to anti-fogging properties, it is needed to impart extended wettability (namely hydrophilicity) for uniformly spreading attached droplets on the surface or to impart water repellency such that attached droplets are easily removed. Accordingly, the majority of currently investigated antifouling or anti-fogging materials rely upon hydrophilization or water repellency or oil repellency.

According to the surface treatment method for achieving hydrophilization which has hitherto been proposed, for example, an etching treatment and a plasma treatment, though the hydrophilization is achieved to a high degree, its effect is temporary, and the hydrophilized state cannot be kept over a long period of time. Also, there is proposed a surface hydrophilic coating film using a hydrophilic graft polymer as one hydrophilic resin (see, for example, The Chemical Daily-News-, January 30, 1995). According to this report, though this coating film has hydrophilicity to some extent, it could not be said that its affinity with a base material is sufficient. Thus, higher durability has been demanded.

As other members having a surface hydrophilic function, one utilizing titanium oxide as a photocatalyst has hitherto been known. This is based on an oxidative decomposition function and a hydrophilization function of an organic material due to irradiation with light. For example, WO 96/29375 discloses that when a photocatalyst-containing layer is formed on a surface of a base material, the surface is hydrophilized to a high degree depending upon optical pumping of the photocatalyst and reports that by applying this technology to various composite materials, for example, glasses, lenses, mirrors, exterior materials and wet-area members, excellent functions such as anti-fogging properties and antifouling properties can be imparted to such a composite material. A member obtained by coating (applying) titanium oxide on a glass surface is used as a self-cleaning material for building window glasses or automobile windshields. However, in order to reveal an antifouling or anti-fogging function, it was needed to expose such a member to sunlight over a long period of time, and it was inevitable that its properties are deteriorated due to the accumulation of stains with a lapse of time over a long term. Also, it could not be said that the film strength is sufficient, and an enhancement of the durability was need. Also, though a self-cleaning film having a titanium oxide layer on a plastic substrate is used for an automobile side mirror or the like, it is similarly insufficient in film strength. Accordingly, hydrophilic materials having higher abrasion resistance have been demanded.

### SUMMARY OF THE INVENTION

An object of the invention is to provide a surface hydrophilic member which is excellent in adhesion between a hydrophilic layer and a base material and excellent in durability with respect to a hydrophilic layer and a substrate for hydrophilic member which can be used therefor.

In order to achieve the foregoing problems, extensive and intensive investigations were made. As a result, it has been found that by providing an undercoat layer containing a catalyst between a base material and a hydrophilic layer, the adhesion at an interface between the undercoat layer and the hydrophilic layer is enhanced, leading to accomplishment of a first aspect of the invention.

Specifically, the first aspect of the invention is as follows.
(1) A hydrophilic member comprising a base material, an undercoat layer containing a non-volatile catalyst and a hydrophilic layer in this order.
(2) The hydrophilic member as set forth above in (1), wherein the undercoat layer is a layer obtained by hydrolyzing and polycondensing a composition containing at least a metal alkoxide compound selected from Si, Ti, Zr and Al and a non-volatile catalyst.
(3) The hydrophilic member as set forth above in (1) or (2), wherein the hydrophilic layer is a layer obtained by hydrolyzing and polycondensing a composition containing (a) a hydrophilic polymer, (b) a metal alkoxide compound selected from Si, Ti, Zr and Al and (c) a catalyst capable of hydrolyzing and polycondensing the metal alkoxide compound (b) to cause bonding with the hydrophilic polymer (a).
(4) The hydrophilic member as set forth above in any one of (1) to (3), wherein at least one of the catalyst used in the undercoat layer and the catalyst used in the hydrophilic layer is at least one of a metal chelating compound and a silane coupling agent.
(5) The hydrophilic member as set forth above in (4), wherein the metal chelate compound is constituted of a metal element selected from the groups 2A, 3B, 4A and 5A of the periodic table and an oxo or hydroxyl oxygen-containing compound selected from β-diketones, keto esters, hydroxycarboxylic acids or esters thereof, amino alcohols and enolic active hydrogen compounds.
(6) The hydrophilic member as set forth above in (4), wherein the silane coupling agent has a functional group exhibiting acidity or alkalinity.
(7) The hydrophilic member as set forth above in (1), wherein the base material is a glass, a metal, a ceramic, a stone, a plastic or a resin.
(8) The hydrophilic member as set forth above in (3), wherein the hydrophilic polymer (a) is represented by any one of the following formulae (I), (II) and (III). 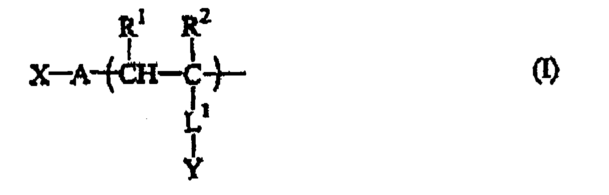 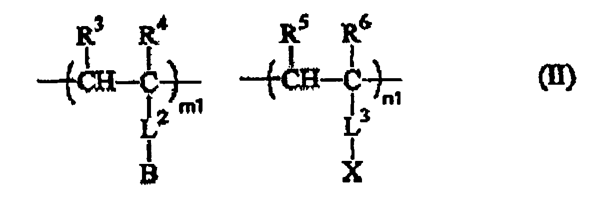 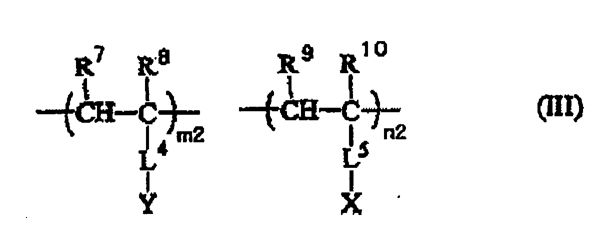 In the formulae (I) to (III), R¹, R², R³, R⁴, R⁵, R⁶ R⁷, R⁸, R⁹ and R¹⁰ each independently represents a hydrogen atom or a hydrocarbon group; m1, m2, n1 and n2 each represents a molar ratio of monomers, provided that m1 ≥ 5, m2 ≥ 50, (m1 + n1) = 100, and (m2 + n2) = 100; X represents a hydrolyzable silyl group (hereinafter sometimes referred to as "reactive group"); A, L¹, L², L³, L⁴ and L⁵ each independently represents a single bond or a connecting group; Y represents -NHCOR¹¹, -CONH₂, -CON(R¹¹)₂, -COR¹¹, -O, -CO₂M, -SO₃M, -PO₃M, -OPO₃M or N(R¹¹)₃Z¹; R¹¹ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (IV). 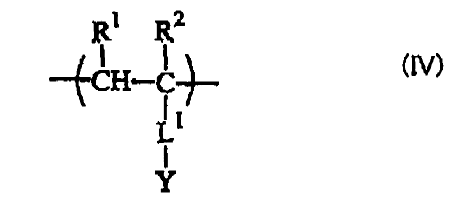 In the formula (IV), R¹, R², L¹ and Y are the same as those in the formula (I).
(9) The hydrophilic member as set forth above in (1), which is an automobile glass.
(10) The hydrophilic member as set forth above in (1), which is a building glass.
(11) A substrate for hydrophilic member comprising a base material and an undercoat layer containing a non-volatile catalyst.
(12) The substrate for hydrophilic member as set forth above in (11), wherein the undercoat layer is a layer obtained by hydrolyzing and polycondensing a composition containing at least a metal alkoxide compound selected from Si, Ti, Zr and Al and a non-volatile catalyst.
(13) The substrate for hydrophilic member as set forth above in any one of (11) to (13), wherein the catalyst used in the undercoat layer is at least one of a metal chelating compound and a silane coupling agent.
(14) The substrate for hydrophilic member as set forth above in (13), wherein the metal chelate compound is constituted of a metal element selected from the groups 2A, 3B, 4A and 5A of the periodic table and an oxo or hydroxyl oxygen-containing compound selected from β-diketones, keto esters, hydroxycarboxylic acids or esters thereof, amino alcohols and enolic active hydrogen compounds.
(15) The substrate for hydrophilic member as set forth above in (13), wherein the silane coupling agent has a functional group exhibiting acidity or alkalinity.
(16) The substrate for hydrophilic member as set forth above in (11), wherein the base material is a glass, a metal, a ceramic, a stone, a plastic or a resin.
   Besides, the following embodiments are preferable.
(17) The hydrophilic member as set forth above in (1) or the substrate for hydrophilic member as set forth above in (11), wherein the catalyst is Ti(acac)₂.
(18) The hydrophilic member as set forth above in (3), wherein the hydrophilic layer further contains (d) colloidal silica.
(19) The hydrophilic member as set forth above in (3), wherein the hydrophilic layer has surface free energy of from 70 mN/m to 95 mN/m.
(20) The hydrophilic member as set forth above in (3), wherein the hydrophilic polymer (a) has a density of a hydrophilic group of from 1 to 30 meq/g.
(21) The hydrophilic member as set forth above in (3), wherein the hydrophilic polymer (a) has a viscosity of from 0.1 to 100 cPs (as a 5 % aqueous solution).
(22) The hydrophilic member as set forth above in (1), wherein the hydrophilic layer has a light transmittance of from 100 % to 70 %.
(23) The hydrophilic member as set forth above in (1) or the substrate for hydrophilic member as set forth above in (11), wherein the undercoat layer is subjected to a plasma etching treatment or incorporated with a metal particle to provide fine irregularities.

According to the first aspect of the invention, by providing an undercoat layer containing a catalyst between a base material and a hydrophilic layer, the adhesion at an interface between the undercoat layer and the hydrophilic layer is enhanced. As a result, a surface hydrophilic member which is excellent in durability with respect to the hydrophilic layer and a substrate for hydrophilic member which can be used therefor can be provided.

In order to achieve the foregoing problems, extensive and intensive investigations were further made. As a result, it has been found that by providing on a base material an undercoat layer having a large amount of a hydroxyl group on a surface thereof, the adhesion at an interface between the undercoat layer and a hydrophilic layer is enhanced, leading to accomplishment of a second aspect of the invention.

Specifically, the second aspect of the invention is as follows.
(1) A hydrophilic member comprising a base material, an undercoat layer containing a partial structure represented by the following formula (1) and a hydrophilic layer in this order, wherein a surface of the undercoat layer has a value of M-OH/M of from 1 to 0.4.

   Formula (1) M-OH

   In the formula, M represents Si, Ti, Zr or Al.
(2) The hydrophilic member as set forth above in (1), wherein a value of M-OH/M on a surface of the base material is smaller than the value of M-OH/M on the surface of the undercoat layer.
(3) The hydrophilic member as set forth above in (1) or (2), wherein the undercoat layer is a layer obtained by hydrolyzing and polycondensing a metal alkoxide compound selected from Si, Ti, Zr and Al.
(4) The hydrophilic member as set forth above in (3), wherein the hydrolysis and polycondensation are carried out at from 30 to 200 °C.
(5) The hydrophilic member as set forth above in any one of (1) to (4), wherein the undercoat layer has a surface roughness (Ra) of from 1.0 to 50 nm.
(6) The hydrophilic member as set forth above in any one of (1) to (5), wherein the undercoat layer is subjected to a plasma etching treatment or incorporated with a particle.
(7) The hydrophilic member as set forth above in any one of (1) to (6), wherein the hydrophilic layer is a layer obtained by hydrolyzing and polycondensing a composition containing (a) a hydrophilic polymer, (b) a metal alkoxide compound selected from Si, Ti, Zr and Al and (c) a catalyst capable of hydrolyzing and polycondensing the metal alkoxide compound (b) to cause bonding with the hydrophilic polymer (a).
(8) The hydrophilic member as set forth above in (7), wherein the hydrophilic polymer (a) is represented by any one of the following formulae (I), (II) and (III). 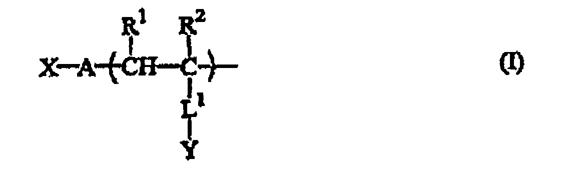 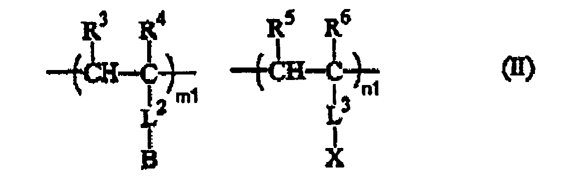 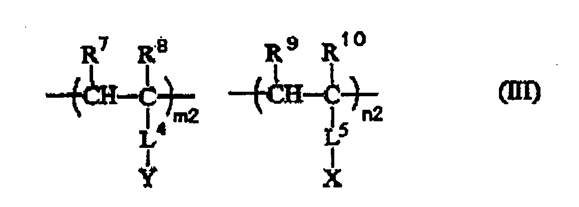 In the formulae (I) to (III), R¹, R², R³, R⁴, R⁵, R⁶, R⁷, R⁸, R⁹ and R¹⁰ each independently represents a hydrogen atom or a hydrocarbon group; m1, m2, n1 and n2 each represents a molar ratio of monomers, provided that m1 ≥ 5, m2 ≥ 50, (m1 + n1) = 100, and (m2 + n2) = 100; X represents a hydrolyzable silyl group (hereinafter sometimes referred to as "reactive group"): A, L¹, L², L³, L⁴ and L⁵ each independently represents a single bond or a connecting group; Y represents NHCOR¹¹, -CONH₂, -CON(R¹¹)₂, -COR¹¹, -O, -CO₂M, -SO₃M, -PO₃M, -OPO₃M or -N(R¹¹)₃Z¹; R¹¹ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (IV). 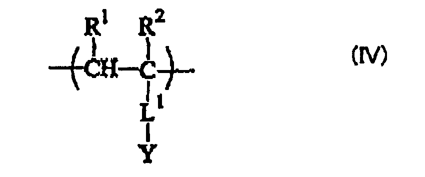 In the formula (IV), R¹, R², L¹ and Y are the same as those in the formula (I).
(9) The hydrophilic member as set forth above in any one of (1) to (8), wherein the base material contains an Si-OH structure.
(10) The hydrophilic member as set forth above in (1), which is an automobile glass.
(11) The hydrophilic member as set forth above in (1), which is a building glass.
(12) A substrate for hydrophilic member comprising a base material and an undercoat layer containing a partial structure represented by the following formula (1), wherein a surface of the undercoat layer has a value of M-OH/M of from 1 to 0.4.

   Formula (1) M-OH

   In the formula, M represents Si, Ti, Zr or Al.
(13) The substrate for hydrophilic member as set forth above in (12), wherein a value of M-OH/M on a surface of the base material is smaller than the value of M-OH/M on the surface of the undercoat layer.
(14) The substrate for hydrophilic member as set forth above in (12) or (13), wherein the undercoat layer is a layer obtained by hydrolyzing and polycondensing a metal alkoxide compound selected from Si, Ti, Zr and Al.
(15) The substrate for hydrophilic member as set forth above in (14), wherein the hydrolysis and polycondensation are carried out at from 30 to 200 °C.
(16) The substrate for hydrophilic member as set forth above in any one of (12) to (15), wherein the undercoat layer has a surface roughness (Ra) of from 1.0 to 50 nm.
(17) The substrate for hydrophilic member as set forth above in any one of (12) to (16), wherein the undercoat layer is subjected to a plasma etching treatment or incorporated with a particle.
(18) The substrate for hydrophilic member as set forth above in any one of (12) to (17), wherein the base material contains an Si-OH structure.
(19) A process for producing a hydrophilic member comprising coating a base material with a composition containing at least a metal alkoxide compound selected from Si, Ti, Zr and Al, heating the applied composition at from 30 to 200 °C to provide an undercoat layer and then providing a hydrophilic layer on the undercoat layer.
(20) The process for producing a hydrophilic member as set forth above in (19), wherein the composition contains a catalyst.
(21) A process for producing a substrate for hydrophilic member comprising coating a base material with a composition containing at least a metal alkoxide compound selected from Si, Ti, Zr and Al and heating the applied composition at from 30 to 200 °C to provide an undercoat layer.
(22) The process for producing a substrate for hydrophilic member as set forth above in (21), wherein the composition contains a catalyst.
   Besides, the following embodiments are preferable.
(23) The hydrophilic member as set forth above in (7), wherein the hydrophilic layer further contains (d) colloidal silica.
(24) The hydrophilic member as set forth above in (1), wherein the hydrophilic layer has surface free energy of from 70 mN/m to 95 mN/m.
(25) The hydrophilic member as set forth above in (7), wherein the hydrophilic polymer (a) has a density of a hydrophilic group of from 1 to 30 meq/g.
(26) The hydrophilic member as set forth above in (7), wherein the hydrophilic polymer (a) has a viscosity of from 0.1 to 100 cPs (as a 5 % aqueous solution).
(27) The hydrophilic member as set forth above in (1), wherein the hydrophilic layer has a light transmittance of from 100 % to 70 %.

According to the second aspect of the invention, by providing on a base material an undercoat layer containing a partial structure represented by the following formula (1), wherein a surface of the undercoat layer has a value of M-OH/M of from 1 to 0.4, the adhesion at an interface between the undercoat layer and a hydrophilic layer is enhanced. As a result, a surface hydrophilic member which is excellent in durability with respect to the hydrophilic layer and a substrate for hydrophilic member which can be used therefor can be provided.

Formula (1) M-OH

In the formula, M represents Si, Ti, Zr or Al.

### DETAILED DESCRIPTION OF THE INVENTION

The invention is hereunder described in detail.

The substrate for hydrophilic member according to the first aspect of the invention has an undercoat layer containing a non-volatile catalyst on an appropriate base material such as glasses and plastics; and the hydrophilic member of the invention further has a hydrophilic layer (also referred to as "hydrophilic film") on the undercoat layer of the substrate.

In this specification, for the sake of convenience, in explaining the substrate for hydrophilic member and the hydrophilic member of the invention, these are hereinafter sometimes summarized and simply referred to as "hydrophilic member".

The non-volatile catalyst which is used in the undercoat layer of the hydrophilic member according to the first aspect of the invention is a catalyst other than those having a boiling point of lower than 125 °C. In other words, the non-volatile catalyst includes those having a boiling point of 125 °C or higher and those which originally have no boiling point (inclusive of those which do not cause phase change such as heat decomposition). Also, since a proper heating temperature of this composition is no higher than 150 °C, catalysts having a boiling point of 150 °C or higher and catalysts which originally have no boiling point are more preferable.

The non-volatile catalyst which is used in the first aspect of the invention is not particularly limited, and examples thereof include metal chelate compounds and silane coupling agents.

The foregoing metal chelate compound (hereinafter also referred to as "metal complex") is not particularly limited and is, for example, a metal complex which is constituted of a metal element selected from the groups 2A, 3B, 4A and 5A of the periodic table and an oxo or hydroxyl oxygen-containing compound selected from β-diketones, keto esters, hydroxycarboxylic acids or esters thereof, amino alcohols and enolic active hydrogen compounds.

Of the constitutional metal elements, elements of the group 2A (for example, Mg, Ca, St and Ba), elements of the group 3B (for example, Al and Ga), elements of the group 4A (for example, Ti and Zr) and elements of the group 5A (for example, V, Nb and Ta) are preferable, and each of them forms a complex having an excellent catalytic effect. Above all, complexes obtained from Zr, Al or Ti are excellent and preferable.

In the invention, examples of the oxo or hydroxyl oxygen-containing compound which constitutes a ligand of the foregoing metal complex include β-diketones (for example, acetylacetone, acetylacetone (2,4-pentanedione) and 2,4-heptanedione), keto esters (for example, methyl acetoacetate, ethyl acetoacetate and butyl acetoacetate), hydroxycarboxylic acids and esters thereof (for example, lactic acid, methyl lactate, salicylic acid, ethyl salicylate, phenyl salicylate, malic acid, tartaric acid and methyl tartarate), keto alcohols (for example, 4-hydroxy-4-methyl-2-pentanone, 4-hydroxy-2-pentanone, 4-hydroxy-4-methyl-2-pentanone and 4-hydroxy-2-heptanone), amino alcohols (for example, monoethanolamine, N,N-dimethylethanolamine, N-methyl-monoethanolamine, diethanolamine and triethanolamine), enolic active hydrogen compounds (for example, methylolmelamine, methylolurea, methylolacrylamide and diethyl malonate) and acetylacetone (2,4-pentanedione) compounds having a substituent on the methyl group, methylene group or carbonyl carbon thereof.

The ligand is preferably an acetylacetone derivative. In the invention, the acetylacetone derivative refers to an acetylacetone compound having a substituent on the methyl group, methylene group or carbonyl carbon thereof. Examples of the substituent which is substituted on the methyl group of acetylacetone include a linear or branched alkyl group, a linear or branched acyl group, a linear or branched hydroxyalkyl group, a linear or branched carboxyalkyl group, a linear or branched alkoxy group and a linear or branched alkoxyalkyl group each having from 1 to 3 carbon atoms; examples of the substituent which is substituted on the methylene group of acetylacetone include a linear or branched carboxyalkyl group and a linear or branched hydroxyalkyl group each having from 1 to 3 carbon atoms as well as a carboxyl group; and examples of the substituent which is substituted on the carbonyl carbon of acetylacetone include an alkyl group having from 1 to 3 carbon atoms, and in this case, a hydrogen atom is added to the carbonyl carbon to form a hydroxyl group.

Examples of preferred acetylacetone derivatives include acetylacetone, ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone and diacetone alcohol. Of these, acetylacetone and diacetylacetone are especially preferable. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group and an ammonio group may be coordinated on the metal element.

Examples of preferred metal complexes include a tris(acetylacetonato)aluminum complex salt, a di(acetylacetonato)aluminum aquocomplex, a mono(acetylacetonato)aluminum chlorocomplex salt, a di-(diacetylacetonato)aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate), a zirconium tris(benzoic acid) complex salt, tetraethyl orthotitanate and tetraisopropoxyzirconium. These metal complexes exhibit excellent stability in an aqueous coating solution and are excellent in a catalytic effect in a sol-gel reaction at the heating and drying. Above all, ethylacetoacetate aluminum diisopropylate, aluminum tris(othylacetoacetate), a di(acetylacetonato)titanium complex salt, zirconium tris(ethylacetoacetate), tetraethyl orthotitanate and tetraisopropoxyzirconium are especially preferable.

In this specification, the description of a counter salt of the foregoing metal complex is omitted. The kind of the counter salt is arbitrary so far as it is a water-soluble salt which keeps the electric charge as a complex compound neutral. Salts which can be stoichiometrically kept neutral, for example, nitrates, halogenic acid salts, sulfates and phosphates, are useful. The behavior of a silica sol-gel reaction of the metal complex is described in detail in J. Sol-Gel. Sci. and Tec., 16, 209 (1999). As its reaction mechanism, the following scheme may be presumed. That is, it is thought that the metal complex takes a coordination structure and is stable in a coating solution and in a dehydration condensation reaction starting with a heating and drying step after coating, accelerates crosslinking according to a mechanism similar to an acid catalyst. In any event, the use of this metal complex made it possible to improve the stability with time of coating solution and the coated surface quality and to attain high durability.

The foregoing metal complex catalyst is easily available as a commercial product and is also obtainable by a known synthesis method, for example, a reaction between each metal chloride and an alcohol.

In the invention, the silane coupling agent which is used as the non-volatile catalyst is not particularly limited, and examples thereof include silane coupling agents having a functional group exhibiting acidity or alkalinity, In more detail, there are exemplified silane coupling agents having a functional group exhibiting acidity, for example, peroxo acid, carboxylic acids, carbohydrazoic acid, carboximidic acid, sulfonic acid, sulfinic acid, sulfenic acid, selenonic acid, selenic acid, selenenic acid, telluronic acid, and alkali metal salts thereof; and silane coupling agents having a functional group exhibiting alkalinity (for example, an amino group).

The undercoat layer of the hydrophilic member according to the first aspect of the invention is preferably an undercoat layer obtained by hydrolyzing and polycondensing a composition containing at least a metal alkoxide compound selected from Si, Ti, Zr and Al and a non-volatile catalyst.

The undercoat layer obtained by hydrolyzing and polycondensing a composition containing at least a metal alkoxide compound selected from Si, Ti, Zr and Al and a non-volatile catalyst has a crosslinking structure. In the invention, the thus formed crosslinking structure by the hydrolysis and polycondensation of a metal alkoxide is hereinafter properly referred to as "sol-gel crosslinking structure".

The metal alkoxide compound selected from Si, Ti, Zr and Al (hereinafter sometimes referred to as "metal alkoxide") is a hydrolyzable, polymerizable compound having a functional group which is polycondensable upon hydrolysis in a structure thereof and working a function as a crosslinking agent and when polycondensed with other metal alkoxide, forms a firm crosslinked film having a crosslinking structure. The metal alkoxide can be represented by the following formula (IV-1) or (IV-2). In these formulae, R⁸ represents a hydrogen atom, an alkyl group or an aryl group; R⁹ represents an alkyl group or an aryl group; Z represents Si, Ti or Zr; and m represents an integer of from 0 to 2. When R⁸ and R⁹ each represents an alkyl group, the carbon atom number is preferably from 1 to 4. The alkyl group and the aryl group may each have a substituent, and examples of the substituent which can be introduced include a halogen atom, an amino group and a mercapto group. This compound is a low-molecular weight compound and preferably has a molecular weight of not more than 2,000.

(R⁸)ₘ-Z-(OR⁹)₄₋ₘ (IV-1)

Al-(OR⁹)₃ (IV-2)

Specific examples of the hydrolyzable compounds represented by the formulae (IV-1) and (IV-2) will be given below, but it should not be construed that the invention is limited thereto. In the case where Z represents Si, namely silicon is contained in the hydrolyzable compound, examples thereof include trimethoxysilane, tetramethoxysilane, tetraethoxysilane, tetrapropoxysilane, methyltrimethoxysilane, dimethyldimethoxysilane, γ-chloropropyltriethoxysilane, γ-mercaptopropyltrimethoxysilane, γ-aminopropylethoxysilane, phenyltrimethoxysilane and diphenyldimethoxysilane. Of these, trimethoxysilane, tetramethoxysilane, tetraethoxysilane, methyltrimethoxysilane, dimethyldimethoxysilane and phenyltrimethoxysilane are especially preferable.

In the case where Z represents Ti, namely titanium is contained in the hydrolyzable compound, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate and phenyltriethoxy titanate. In the case where Z represents Zr, namely zirconium is contained in the hydrolyzable compound, examples thereof include zirconates corresponding to the above-exemplified titanium-containing compounds.

Also, in the case where the central metal is Al, namely aluminum is contained in the hydrolyzable compound, examples thereof include trimethoxy aluminate, triethoxy aluminate, tripropoxy aluminate and triisopropoxy aluminate.

Of the metal alkoxides, alkoxides of Si are preferable in view of reactivity and easiness of availability. Concretely, the compounds which are used for the silane coupling agent can be favorably used.

The undercoat layer of the hydrophilic member according to the first aspect of the invention can be formed by coating a base material with a composition containing at least the foregoing metal alkoxide compound and non-volatile catalyst and heating and drying, thereby hydrolyzing and polycondensing the composition, The heating temperature and heating time for forming the undercoat layer are not particularly limited so far as the solvent in the sol liquid can be removed and a firm film can be formed. In view of manufacture aptitude and the like, the heating temperature is preferably no higher than 150 °C, and the heating time is preferably within one hour.

The undercoat layer in the hydrophilic member according to the first aspect of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush and painting with a sponge.

In the thus obtained undercoat layer, the non-volatile catalyst is contained and exists without losing the activity. In particular, the non-volatile catalyst also exists on the surface thereof, and therefore, when a hydrophilic layer as described later is further provided on the undercoat layer, the adhesion at an interface between the undercoat layer and the hydrophilic layer is extremely high.

Also, in the undercoat layer of the hydrophilic member according to the first aspect of the invention, by performing plasma etching or incorporating a metal particle to provide fine irregularities, the adhesion at an interface between the undercoat layer and the hydrophilic layer can be further enhanced.

The substrate for hydrophilic member according to the second aspect of the invention has an undercoat layer containing a partial structure represented by the following formula (1), in which a surface of the undercoat layer has a value of M-OH/M of from 1 to 0.4, on an appropriate base material such as glasses and plastics, and the hydrophilic member according to the second aspect of the invention further has a hydrophilic layer (also referred to as "hydrophilic film") on the undercoat layer.

Formula (1) M-OH

In the formula, M represents Si, Ti, Zr or Al.

In this specification, for the sake of convenience, in explaining the substrate for hydrophilic member and the hydrophilic member of the invention, these are hereinafter sometimes summarized and simply referred to as "hydrophilic member" or "substrate for hydrophilic member.

In the hydrophilic member according to the second embodiment of the invention, the term "M-OH/M" as referred to herein means a proportion of the hydroxyl group-containing metal atom to the whole amount of metal atoms, and the case of M-OH/M = 0 expresses that a hydroxyl group is not contained at all. The M-OH/M is determined from an intensity ratio of M-OH to M as calculated by using TOF-SIMS as an analyzer and V and a Bi³⁺ primary ion gun (0.2 pA, 10 kHz) and using an electronic gun of 20 eV for electrification correction.

In the hydrophilic member according to the second aspect of the invention, a value of M-OH/M on the surface of the base material is smaller than the value of M-OH/M on the surface of the foregoing undercoat layer. This means that the amount of the -OH group on the surface of the undercoat layer is larger than the amount of the -OH group on the surface of the base material. When the amount of the -OH group on the surface of the undercoat layer is larger than the amount of the -OH group on the surface of the base material, the case of providing the undercoat layer on the surface of the base material and further providing thereon the hydrophilic layer as described later enhances the adhesion of the hydrophilic layer and brings excellent durability of the hydrophilic layer as compared with the case of directly providing the hydrophilic layer on the surface of the base material.

In the hydrophilic member according to the second aspect of the invention, a method for regulating the value of M-OH/M on the surface of the undercoat layer at from 1 to 0.4 is not particularly limited. It is preferable that the undercoat layer is one obtained by hydrolyzing and polycondensing a metal alkoxide compound selected from Si, Ti, Zr and Al (hereinafter sometimes simply referred to as "metal alkoxide"). It is preferable that the hydrolysis and polycondensation are carried out at from 30 to 200 °C.

In detail, the foregoing undercoat layer can be provided by coating a base material with a composition containing at least a metal alkoxide compound selected from Si, Ti, Zr and Al and heating and drying the applied composition at from 30 to 200 °C.

After coating with the foregoing composition containing a metal alkoxide compound, by carrying out heating and drying at a temperature in the range of from 30 to 200 °C, the undercoat layer has a crosslinking structure in which the metal alkoxide compound has been hydrolyzed and polycondensed not completely but adequately. Also, since the metal alkoxide compound is not completely hydrolyzed and polycondensed, it is able to have a suitable amount of the M-OH structure.

In the invention, the thus formed crosslinking structure by the hydrolysis and polycondensation of a metal alkoxide is hereinafter properly referred to as "sol-gel crosslinking structure".

In the hydrophilic member according to the second aspect of the invention, when the value of M-OH/M on the surface of the undercoat layer exceeds 1, the sol-gel crosslinking structure in the undercoat layer is insufficient, and therefore, there is a possibility that the durability of the hydrophilic member is insufficient.

Also, when the value of M-OH/M on the surface of the undercoat layer is less than 0.4, the amount of the -OH group on the surface of the undercoat layer is insufficient, and the adhesion to the hydrophilic layer is insufficient. In this case, there is also a possibility that the durability of the hydrophilic member is insufficient.

The metal alkoxide compound selected from Si, Ti, Zr and Al is a hydrolyzable, polymerizable compound having a functional group which is polycondensable upon hydrolysis in a structure thereof and working a function as a crosslinking agent and when polycondensed with other metal alkoxide, forms a firm crosslinked film having a crosslinking structure. The metal alkoxide can be represented by the following formula (IV-1) or (IV-2). In these formulae, R⁸ represents a hydrogen atom, an alkyl group or an aryl group; R⁹ represents an alkyl group or an aryl group; Z represents Si, Ti or Zr; and m represents an integer of from 0 to 2. When R⁸ and R⁹ each represents an alkyl group, the carbon atom number is preferably from 1 to 4. The alkyl group and the aryl group may each have a substituent, and examples of the substituent which can be introduced include a halogen atom, an amino group and a mercapto group. This compound is a low-molecular weight compound and preferably has a molecular weight of not more than 2,000.

(R⁸)ₘ-Z-(OR⁹)₄₋ₘ (IV-1)

Al-(OR⁹)₃ (IV-2)

Specific examples of the hydrolyzable compounds represented by the formulae (IV-1) and (IV-2) will be given below, but it should not be construed that the invention is limited thereto. In the case where Z represents Si, namely silicon is contained in the hydrolyzable compound, examples thereof include trimethoxysilane, tetramethoxysilane, tetraethoxysilane, tetrapropoxysilane, methyltrimethoxysilane, dimethyldimethoxysilane, γ-chloropropyltriethoxysilane, γ-mercaptopropyltrimethoxysilane, γ-aminopropylethoxysilane, phenyltrimethoxysilane and diphenyldimethoxysilane. Of these, trimethoxysilane, tetramethoxysilane, tetraethoxysilane, methyltrimethoxysilane, dimethyldimethoxysilane and phenyltrimethoxysilane are especially preferable.

In the case where Z represents Ti, namely titanium is contained in the hydrolyzable compound, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate and phenyltriethoxy titanate. In the case where Z represents Zr, namely zirconium is contained in the hydrolyzable compound, examples thereof include zirconates corresponding to the above-exemplified titanium-containing compounds.

Also, in the case where the central metal is Al, namely aluminum is contained in the hydrolyzable compound, examples thereof include trimethoxy aluminate, triethoxy aluminate, tripropoxy aluminate and triisopropoxy aluminate.

Of the metal alkoxides, alkoxides of Si are preferable in view of reactivity and easiness of availability. Concretely, the compounds which are used for the silane coupling agent can be favorably used.

In coating with the foregoing composition containing a metal alkoxide compound and heating and drying it at from 30 to 200 °C to provide an undercoat layer, it is preferable that a catalyst for the hydrolysis and polycondensation reaction is contained in the foregoing composition containing a metal alkoxide compound.

The catalyst is not particularly limited, and examples thereof include metal chelate compounds and silane coupling agents.

The metal chelate compound (hereinafter also referred to as "metal complex") is not particularly limited, and the same compounds as in the first aspect of the invention can be used.

The silane coupling agent is not particularly limited, and the same compounds as in the first aspect of the invention can be used.

As the catalyst which is used in the foregoing undercoat layer, in addition to the foregoing metal chelate compounds and silane coupling agents, compounds exhibiting acidity, for example, hydrogen halides (for example, hydrochloric acid), nitric acid, sulfuric acid, sulfurous acid, hydrogen sulfide, perchloric acid, hydrogen peroxide, carboxylic acids (for example, carbonic acid, formic acid and acetic acid), substituted carboxylic acids in which in a structural formula represented by RCOOH, R is substituted with other element or a substituent and sulfonic acids (for example, benzenesulfonic acid); basic compounds, for example, ammoniacal bases (for example, ammonia water) and amines (for example, ethylamine and aniline); and the like may be used.

However, from the standpoints that the hydrolysis and polycondensation of the metal alkoxide compound are efficiently carried out at a relatively low temperature as from 30 to 200 °C and that for the purpose of further enhancing the adhesion to the hydrophilic layer, after heating and drying, the catalyst remains in the undercoat layer while keeping the activity, the metal chelate compound and the silane coupling agent are preferable. From the standpoints of improving the stability with time of a coating solution for undercoat layer and the coated surface quality and attaining high durability, the metal chelate compound is more preferable.

The undercoat layer of the hydrophilic member according to the second aspect of the invention can be formed by coating a base material with a composition containing at least the foregoing metal alkoxide compound and heating and drying the applied composition, thereby hydrolyzing and polycondensing the composition. The heating temperature for forming the undercoat layer is preferably in the range of from 30 to 200 °C. In view of manufacture aptitude and the like, the heating temperature is more preferably no higher than 150 °C.

Also, the heating time is not particularly limited so far as the solvent in the sol liquid can be removed and a firm film can be formed. In view of manufacture aptitude and the like, the heating time is preferably within one hour.

The undercoat layer in the hydrophilic member according to the second aspect of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush and painting with a sponge.

Also, in the undercoat layer of the hydrophilic member according to the second aspect of the invention, by performing plasma etching or incorporating a particle to provide fine irregularities, the amount of the -OH group per an apparent area of the surface of the undercoat layer is large, whereby the adhesion at an interface with the hydrophilic layer can be further enhanced.

The hydrophilic member of the invention further has a hydrophilic layer on the foregoing undercoat layer.

The hydrophilic layer is not particularly limited. The hydrophilic layer is preferably a layer obtained by hydrolyzing and polycondensing a composition containing (a) a hydrophilic polymer, (b) a metal alkoxide compound selected from Si, Ti, Zr and Al and (c) a catalyst capable of hydrolyzing and polycondensing the metal alkoxide compound (b) to cause bonding with the hydrophilic polymer (a).

The foregoing hydrophilic layer has a sol-gel crosslinking structure the same as in the foregoing undercoat layer and can be properly formed by using a metal alkoxide compound, a hydrophilic functional group-containing compound and an adequate catalyst. Of the metal alkoxides, alkoxide of Si are preferable in view of reactivity and easiness of availability. Concretely, the compounds which are used for the silane coupling agent can be favorably used.

Such a hydrophilic layer in which one terminal end of a polymer chain is not fixed and the motility of a polymer chain is large can be easily formed by, for example, preparing a hydrophilic coating solution composition containing (A) a high-molecular weight compound having a reactive group such as a silane coupling group at a terminal end thereof, which is represented by the following formula (I), or a high-molecular weight compound having the subject reactive group as a side chain of a trunk polymer thereof, which is represented by the following formula (II) or (III); (B) a hydrolyzable metal alkoxide compound; and (C) a catalyst capable of causing the hydrolysis and polycondensation and coating with and drying the composition to form a surface hydrophilic layer. The respective components which are contained in the hydrophilic coating solution composition for forming a hydrophilic layer, an aspect of which is a preferred embodiment, are hereunder described.

### [Hydrophilic polymer]

The hydrophilic polymer which is used in the invention is a polymer having a hydrophilic group and having a group capable of causing bonding with the metal alkoxide compound selected from Si, Ti, Zr and Al due to an action of the catalyst or the like. Preferred examples of the hydrophilic group include functional groups, for example, a carboxyl group, an alkali metal salt of a carboxyl group, a sulfonic group, an alkali metal salt of a sulfonic group, a hydroxyl group, an amide group, a carbamoyl group, a sulfonamide group and a sulfamoyl group. These groups may be present at any position in the polymer. The hydrophilic group is bonded directly or via a connecting group from the polymer principal chain or bonded in the polymer side chain or graft side chain, and a polymer structure in which plural hydrophilic groups are present is preferable. Examples of the group capable of causing bonding with the metal alkoxide compound due to an action of the catalyst include reactive groups, for example, a carboxyl group, an alkali metal salt of a carboxyl group, an anhydrous carboxyl group, an amino group, a hydroxyl group, an epoxy group, a methylol group, a mercapto group, an isocyanate group, a block isocyanate group, an alkoxysilyl group, an alkoxy titanate group, an alkoxy aluminate group, an alkoxy zirconate group, an ethylenically unsaturated group, an ester group and a tetrazole group. Preferred examples of the polymer structure having a hydrophilic group and a group capable of causing bonding with the metal alkoxide compound due to an action of the catalyst include polymers in which an ethylenically unsaturated group (for example, an acrylate group, a methacrylate group, an itaconic group, a crotonic group, a cinnamic group, a styrene group, a vinyl group, an allyl group, a vinyl ether group and a vinyl ester group) is subjected to vinyl polymerization, polyesters, polyamides, polycondensed polymers such as polyamic acid and addition polymerized polymers such as polyurethane. Besides, natural cyclic polymer structures, for example, cellulose, amylose and xanthene can be preferably exemplified.

Also, in the hydrophilic polymer which is used in the invention, the log P of the monomer as a constitutional unit thereof is preferably from -3 to 2, and more preferably from -2 to 0. Preferred hydrophilicity is obtained within this range.

The "log P" as referred to herein a logarithm of a value of octanol/water partition coefficient (P) of the compound as calculated by using a software PCModels which was developed by Medicinal Chemistry Project, Pomona College, Claremont, California and is available from Daylight Chemical Information System Inc..

Examples of the hydrophilic polymer which can be used in the invention include polymers made of, as a raw material, a monomer, for example, acrylic esters, methacrylic esters, acrylamides, methacrylamides, vinyl compounds and hydrolyzates thereof, styrenes, acrylic acid and salts thereof, methacrylic acid and salts thereof, acrylonitrile, maleic anhydrides and maleic acid imides.

Of the foregoing monomers, monomers having an amino group, an ammonium group, a hydroxyl group, a sulfonamide group, a carboxyl group or a salt thereof, a phosphoric group or a salt thereof, a sulfonic group or a salt thereof, or an ether group, in particular, an ethyleneoxy group, are especially preferable.

Also, in addition to the foregoing, hydrophilic polymers having a urethane bond, an amide bond or a urea bond in the principal chain thereof can be used.

Specific examples of acrylic esters include 2-hydroxyethyl acrylate, 2-hydroxypropyl acrylate, 2-hydroxypentyl acrylate, trimethylolpropane monoacrylate, pentaerythritol monoacrylate, hydroxybenzyl acrylate, dihydroxyphenethyl acrylate, furfuryl acrylate, tetrahydrofurfuryl acrylate, sulfamoylphenyl acrylate, 2-(hydroxyphenylcarbonyloxy)ethyl acrylate, diethylene glycol ethyl ether acrylate and 2-ethoxyethyl acrylate.

Specific examples of methacrylic esters include 2-hydroxyethyl methacrylate, 2-hydroxypropyl methacrylate, 2-hydroxypentyl methacrylate, trimethylolpropane monomethacrylate, pentaerythritol monomethacrylate, dihydroxyphenethyl methacrylate, furfuryl methacrylate, tetrahydrofurfuryl methacrylate, sulfamoylphenyl methacrylate, 2-(hydroxyphenylcarbonyloxy)ethyl methacrylate, diethylene glycol ethyl ether methacrylate, 2-ethoxyethyl methacrylate and methoxytetraethylene glycol monomethacrylate.

Specific examples of acrylamides include acrylamide, N-methyl acrylamide, N-ethyl acrylamide, N-propyl acrylamide, N-butyl acrylamide, N-hydroxyethyl acrylamide, N-phenyl acrylamide, N,N-dimethyl acrylamide, N-methyl-N-phenyl acrylamide and N-hydroxyethyl-N-methyl acrylamide.

Specific examples of methacrylamides include methacrylamide, N-methyl methacrylamide, N-ethyl methacrylamide, N-propyl methacrylamide, N-butyl methacrylamide, N-hydroxyethyl methacrylamide, N-(sulfamoylphenyl) methacrylamide, N-(phenylsulfonyl) methacrylamide, N,N-dimethyl methacrylamide, N-methyl-N-phenyl methacrylamide and N-hydroxyethyl-N-methyl methacrylamide.

Specific examples of vinyl compounds include vinyl acetate and vinylpyrrolidone.

Specific examples of styrenes include trimethoxystyrene, carboxystyrene and sulfone or salts thereof.

Concretely, there are exemplified structures represented by the following formulae (I), (II) and (III).

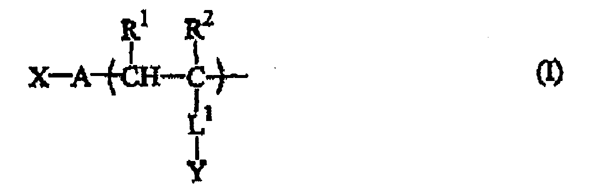

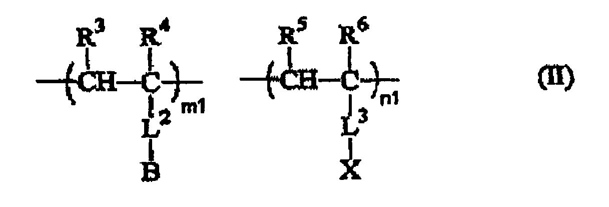

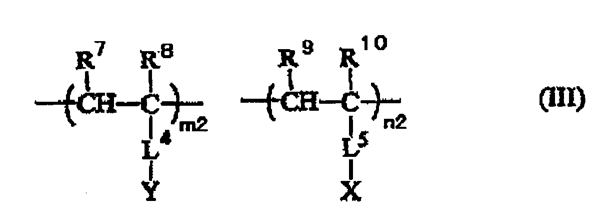

In the formulae (I) to (III), R¹, R², R³, R⁴, R⁵, R⁶, R⁷, R⁸, R⁹ and R¹⁰ each independently represents a hydrogen atom or a hydrocarbon group; m1, m2, n1 and n2 each represents a molar ratio of monomers, provided that m1 ≥ 5, m2 ≥ 50, (m1 + n1) = 100, and (m2 + n2) = 100; X represents a hydrolyzable silyl group (hereinafter sometimes referred to as "reactive group"); A, L¹, L², L³, L⁴ and L⁵ each independently represents a single bond or a connecting group; Y represents NHCOR¹¹, -CONH₂, -CON(R¹¹)₂, -COR¹¹, -O, -CO₂M, -SO₃M, -PO₃M, -OPO₃M or -N(R¹¹)₃Z¹; R¹¹ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (IV).

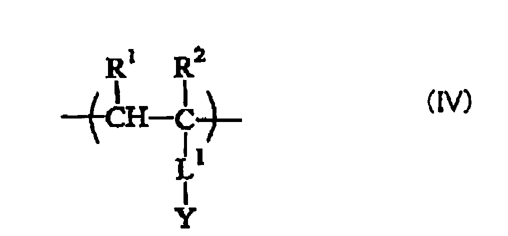

In the formula (IV), R¹, R², L¹ and Y are the same as those in the formula (I).

The hydrophilic polymer which is used in the invention has a reactive group and a hydrophilic group. There are the case where a reactive group is present at only one terminal end of the principal chain; and the-case where plural reactive groups are present in the principal chain.

The "reactive group" as referred to herein means a functional group capable of reacting with a hydrolysis and polycondensation product of the metal alkoxide to form a chemical bond. Also, the reactive groups may form a chemical bond each other. The hydrophilic polymer is preferably water-soluble, and it is preferable that the hydrophilic polymer becomes water-insoluble upon reaction with a hydrolysis and polycondensation product of the metal alkoxide.

Similar to the usual meanings, the chemical bond includes a covalent bond, an ionic bond, a coordination bond and a hydrogen bond. The chemical bond is preferably a covalent bond.

In general, the reactive group is identical with a reactive group contained in a crosslinking agent of a polymer and is a compound capable of forming crosslinking by heat or light. The crosslinking agent is described in Crosslinking Agent Handbook, written by Shinzo YAMASHITA and Tosuke KANEKO and published by Taiseisha Ltd. (1981).

Examples of the reactive group include carboxyl (HOOC-) or a salt thereof (MOOC-, wherein M represents a cation), an anhydrous carboxyl group (for example, monovalent groups derived from succinic anhydride, phthalic anhydride or maleic anhydride), amino (H₂N-), hydroxyl (HO-), an epoxy group (for example, a glycidyl group), methylol (HO-CH₂-), mercapto (HS-), isocyanate (OCN-), a block isocyanate group, an alkoxysilyl group, an alkoxy titanate group, an alkoxy zirconate group, an ethylenically unsaturated group, an ester group and a tetrazole group. The reactive group is most preferably an alkoxysilyl group. Two or more reactive groups may be present at one terminal end. The two or more reactive groups may be different from each other.

It is preferable that a connecting group is mediated between the repeating unit and the reactive group of the hydrophilic polymer or between the repeating unit and the principal chain of the hydrophilic polymer. It is preferable that the connecting groups A, L¹, L² and L³ are each independently a single bond or selected from -O-, -S-, -CO-, -NH-, -N<, an aliphatic group, an aromatic group, a heterocyclic group and a combination thereof. The connecting group is preferably -O-, -S-, -CO-, -NH- or a combination containing -O-, -S-, -CO- or -NH-.

### (Hydrophilic polymer (I) having a reactive group at a terminal end thereof)

The hydrophilic polymer having a reactive group at one terminal end thereof can be, for example, synthesized by radical polymerizing a hydrophilic monomer (for example, acrylamide, acrylic acid and a potassium salt of 3-sulfopropyl methacrylate) in the presence of a chain transfer agent (described in Kanji KAMACHI and Tsuyoshi ENDO, Radical Polymerization Handbook, NTS) or an iniferter (described in Macromolecules, 1986, 19, pages 287, et seq., Otsu). Examples of the chain transfer agent include 3-mercaptopropionic acid, 2-aminoethanethiol hydrochloride, 3-mercaptopropanol, 2-hydroxyethyl disulfide and 3-mercaptopropyl trimethoxysilane, Also, a hydrophilic monomer (for example, acrylamide) may be radical polymerized by using a radical polymerization initiator having a reactive group (for example, carboxyl) without using a chain transfer agent.

The hydrophilic chain having a reactive group at one terminal end thereof preferably has a mass average molecular weight of not more than 1,000,000, more preferably from 1,000 to 1,000,000, and most preferably from 2,000 to 100,000.

The high-molecular weight compound represented by the formula (I) is a hydrophilic polymer having a reactive group at a terminal end thereof. In the formula (I), R¹ and R² each independently represents a hydrogen atom or a hydrocarbon group having not more than 8 carbon atoms. Examples of the hydrocarbon group include an alkyl group and an aryl group; and a linear, branched or cyclic alkyl group having not more than 8 carbon atoms is preferable. Specific examples thereof include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group. R¹ and R² are each preferably a hydrogen atom, a methyl group or an ethyl group from the viewpoints of effects and easiness of availability.

Such a hydrocarbon group may further have a substituent. When the alkyl group has a substituent, the substituted alkyl group is constituted by bonding between a substituent and an alkylene group. Here, a monovalent non-metal atomic group exclusive of hydrogen is used as the substituent. Preferred examples of the substituent include a halogen atom (for example, -F, -Br, -Cl and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonate group, a sulfamoyl group, an N-alkylsulfamoyl group, an NN-dialkylsulfamoyl group, an N-arylsulfamoyl group, an N-alkyl-N-arylsulfamoyl group, a phosphono group, a phosphonate group, a dialkylphosphono group, a diarylphosphono group, a monoalkylphosphono group, an alkylphosphonate group, a monoarylphosphono group, an arylphosphonate group, a phosphonoxy group, a phosphonatoxy group, an aryl group and an alkenyl group.

On the other hand, as the alkylene group in the substituted alkyl group, an alkylene group obtained by eliminating any one of hydrogen atoms on the foregoing alkyl group having from 1 to 20 carbon atoms to convert it into a divalent organic residue can be exemplified. Preferred examples thereof include a linear alkylene group having from 1 to 12 carbon atoms, a branched alkylene group having from 3 to 12 carbon atoms and a cyclic alkylene group having from 5 to 10 carbon atoms. Specific examples of the preferred substituted alkyl group obtained by combining the subject substituent and alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group, a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propenyl group, a 2-butynyl group and a 3-butynyl group.

A and L¹ each represents a single bond or an organic connecting group. Here, when A and L¹ each represents an organic connecting group, A and L¹ each represents a polyvalent connecting group composed of a non-metal atom. Specific examples of the connecting group include those composed of from 1 to 60 carbon atoms, from 0 to 10 nitrogen atoms, from 0 to 50 oxygen atoms, from 1 to 100 hydrogen atoms and from 0 to 20 sulfur atoms. More specific examples of the connecting group include the following structural units or those constituted through a combination thereof.

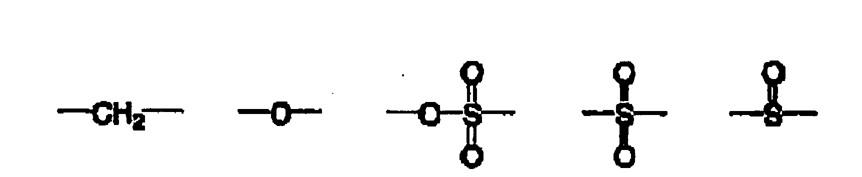

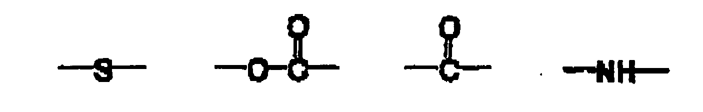

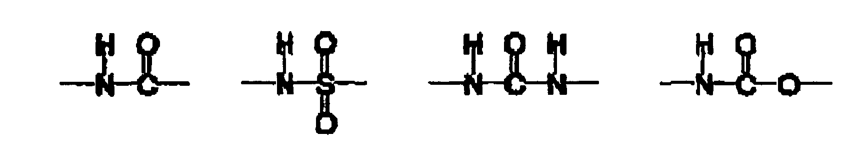

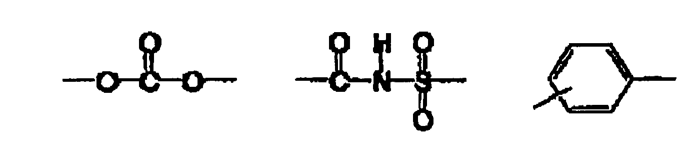

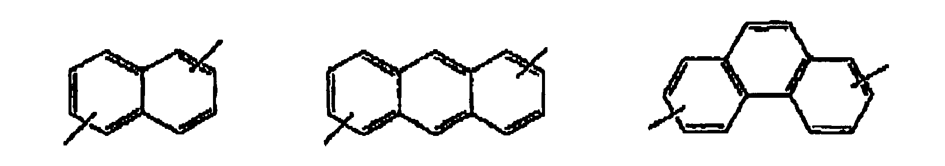

Y represents -NHCOR⁷, -CONH₂, -CON(R⁷)₂, -COR⁷, -OH, -CO₂M, -SO₃M, -PO₃M, -OPO₃M or -N(R⁷)₃Z¹. Here, R⁷ represents a linear, branched or cyclic alkyl group, an aryl group or an aralkyl group each having from 1 to 18 carbon atoms; M represents a hydrogen atom, an alkali metal, an alkaline earth metal or an onium; and Z' represents a halogen ion. When plural R⁷s are present as in -CON(R⁷)₂, R⁷s may be taken together to form a ring; and the formed ring may be a hetero ring containing a hetero atom, for example, an oxygen atom, a sulfur atom and a nitrogen atom. R⁷ may further have a substituent. Here, examples of the substituent which can be introduced include those exemplified above as the substituent which can be introduced when R¹ and R² each represents an alkyl group.

Specific examples of R⁷ which is preferable include a methyl group, an ethyl group, a propyl group, a butyl group, a pentyl group, a hexyl group, a heptyl group, an octyl group, an isopropyl group, an isobutyl goup, an s-butyl, a t-butyl group, an isopentyl, a neopentyl group, a 1-methylbutyl group, an isohexyl group, a 2-ethylhexyl group, a 2-methylhexyl group and a cyclopentyl group. Also, examples of M include a hydrogen atom, an alkali metal (for example, lithium, sodium and potassium), an alkaline earth metal (for example, calcium and barium) and an onium (for example, ammonium, iodinium and sulfonium). Specific examples of Y which is preferable include -NHCOCH₃, -CONH₂, -COOH, -SO₃⁻NMe₄⁺ and a morpholino group.

Specific examples (Illustrative Compounds 1 to 38) of the hydrophilic polymer (a) which can be favorably used in the invention will be given below, but it should not be construed that the invention is limited thereto.

| | |
|---|---|
| 1 | 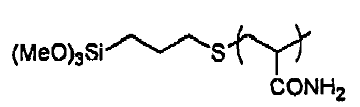 |
| 2 | 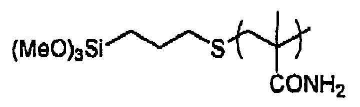 |
| 3 | 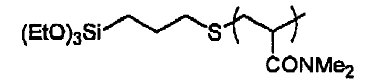 |
| 4 | 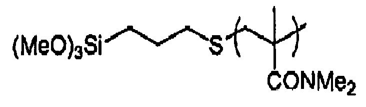 |
| 5 | 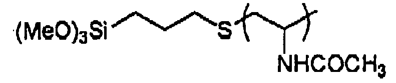 |
| 6 | 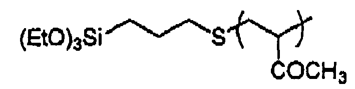 |
| 7 | 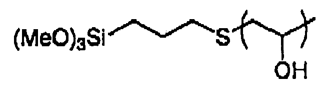 |
| 8 | 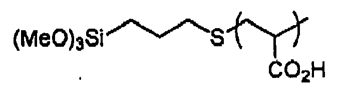 |
| 9 | 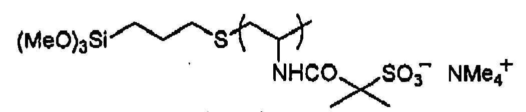 |
| 10 | 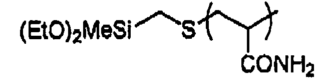 |
| 11 | 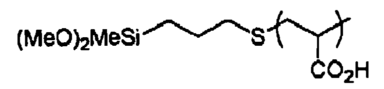 |
| 12 | 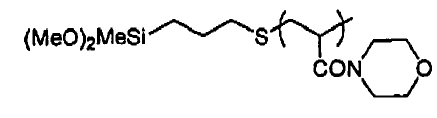 |
| 13 | 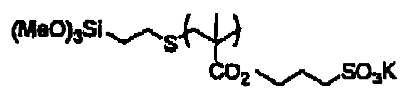 |
| 14 | 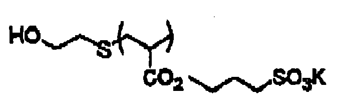 |
| 15 | 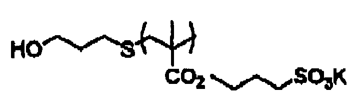 |
| 16 | 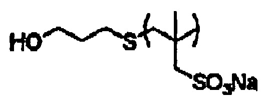 |
| 17 | 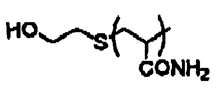 |
| 18 | 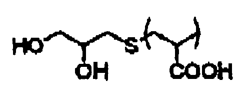 |
| 19 | 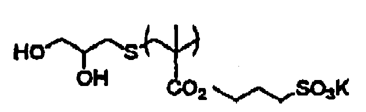 |
| 20 | 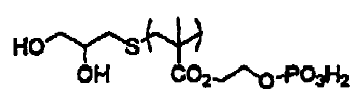 |
| 21 | 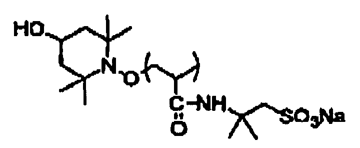 |
| 22 | 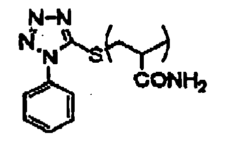 |
| 23 | 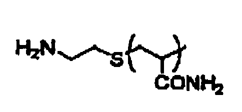 |
| 24 | 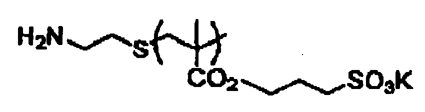 |
| 25 | 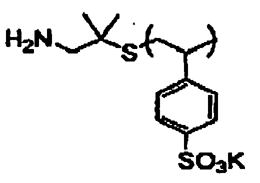 |
| 26 | 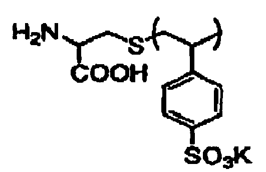 |
| 27 | 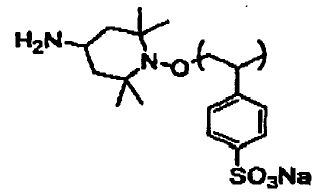 |
| 28 | 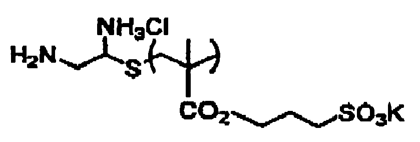 |
| 29 | 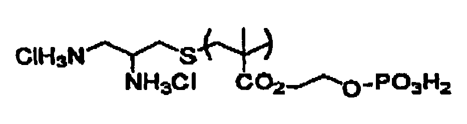 |
| 30 | 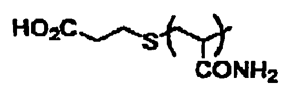 |
| 31 | 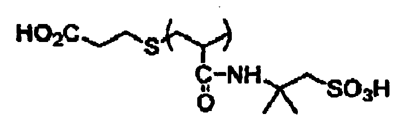 |
| 32 | 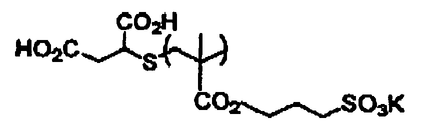 |
| 33 | 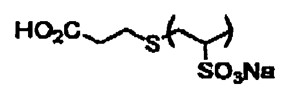 |
| 34 | 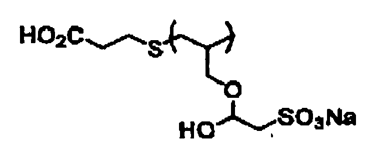 |
| 35 | 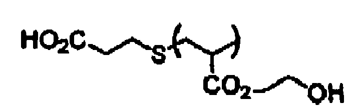 |
| 36 | 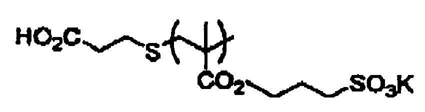 |
| 37 | 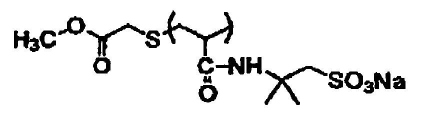 |
| 38 | 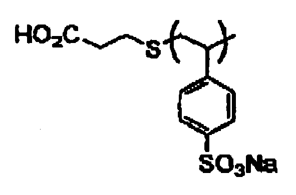 |

The above-exemplified hydrophilic polymers can be synthesized by radical polymerizing a radical polymerizable monomer represented by the following formula (i) by using a silane coupling agent having chain transfer ability in radical polymerization as presented by the following formula (ii). Since the silane coupling agent (ii) has chain transfer ability, a polymer in which a silane coupling group is introduced at a terminal end of the polymer principal chain in the radical polymerization can be synthesized.

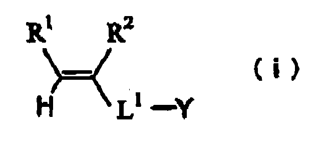

X-A-SH (ii)

In the foregoing formulae (i) and (ii), A, R¹ to R², L¹ and Y are synonymous with those in the foregoing formula (I). These compounds are commercially available or can be easily synthesized.

### (Hydrophilic polymer (II) having plural reactive groups)

As the hydrophilic polymer having plural reactive groups as represented by the foregoing formula (II), a hydrophilic graft polymer obtained by introducing a hydrophilic polymer side chain into a trunk polymer having a functional group capable of reacting with the metal alkoxide can be used.

In the foregoing formula (II), R³, R⁴, R⁵ and R⁶ each independently represents the same substituent as in R¹ and R² in the foregoing formula (I). L² and L³ are each synonymous with L¹ in the foregoing formula (I). B is represented by the foregoing formula (IV); and R¹, R², L¹ and Y in the formula (IV) are the same as those in the formulae (I) and (II). X is synonymous with X in the foregoing formula (I).

This hydrophilic graft polymer can be prepared by employing a method which is known as a general synthesis method of graft polymer. Concretely, the general synthesis method of graft polymer is described in Graft Polymerization and Its Application, written by Fumio IDE and published by Kobunshi Kankokai (1977) and Shin Kobunshi Jikken-gaku (New Polymer Experimentology) 2: Synthesis and Reaction of Polymer, edited by The Society of Polymer Science, Japan and published by Kyoritsu Shuppan Co., Ltd. (1995). These can be applied.

The synthesis method of graft polymer is basically classified into three methods of (1) a method of polymerizing a branched monomer from a trunk polymer, (2) a method of bonding a branched polymer to a trunk polymer and (3) a method of copolymerizing a branched polymer on a trunk polymer (macromer method). Though the hydrophilic graft polymer which is used in the invention can be prepared by using any of these three methods, the "macromer method" (3) is especially excellent from the viewpoints of manufacture aptitude and control of the film structure.

The synthesis of a graft polymer using a macromonomer is described in the foregoing Shin Kobunshi Jikkengaku (New Polymer Experimentology) 2: Synthesis and Reaction of Polymer, edited by The Society of Polymer Science, Japan and published by Kyoritsu Shuppan Co., Ltd. (1995). The synthesis of a graft polymer using a macromonomer is also described in detail in Chemistry and Industry of Macromonomer, written by Yuya YAMASHTTA and published by Industrial Publishing & Consulting, Inc. The graft polymer which is used in the invention can be first synthesized by copolymerizing a hydrophilic macromonomer synthesized by the foregoing method (corresponding to a precursor of the hydrophilic polymer side chain) with a monomer having a functional group capable of reacting with a crosslinking agent.

### (Hydrophilic macromonomer)

Among the hydrophilic macromonomers which are used in the invention, macromonomers derived from a carboxyl group-containing monomer (for example, acrylic acid and methacrylic acid); sulfonic acid based macromonomers derived from a monomer (for example, 2-acrylamido-2-methylpropanesulfonic acid, vinylstyrenesulfonic acid and salt thereof); amide based macromonomers (for example, acrylamide and methacrylamide); amide based macromonomers derived from an N-vinylcarboxylic acid amide monomer (for example, N-vinylacetamide and N-vinylformamide); macromonomers derived from a hydroxyl group-containing monomer (for example, hydroxyethyl methacrylate, hydroxyethyl acrylate and glycerol monomethacrylate); and macromonomers derived from an alkoxy group or ethylene oxide group-containing monomer (for example, methoxyethyl acrylate, methoxypolyethylene glycol acrylate and polyethylene glycol acrylate) are especially useful. Also, monomers having a polyethylene glycol chain or a polypropylene glycol chain can be usefully used as the macromonomer of the invention. With respect to these macromonomers, the useful polymer has a mass average molecular weight (hereinafter sometimes simply referred to as "molecular weight") in the range of from 400 to 100,000, preferably in the range of from 1,000 to 50,000, and especially preferably in the range of from 1,500 to 20,000. When the molecular weight is 400 or more, effective hydrophilicity is obtained; and when the molecular weight is not more than 100,000, the polymerizability with a copolymerization monomer for forming the principal chain tends to become high. The both are preferable.

Examples of the reactive functional group of the monomer having a functional group which is copolymerizable with the hydrophilic macromonomer and is able to react with the crosslinking agent (hereinafter properly referred to as "reactive functional group") include a carboxyl group or a salt thereof, an amino group, a hydroxyl group, a phenolic hydroxyl group, an epoxy group (for example, glycidyl), a methyl group, a (block) isocyanate group and a silane coupling agent. Examples of general monomers include monomers described in Crosslinking Agent Handbook, written by Shinzo YAMASHITA and Tosuke KANEKO and published by Taiseisha Ltd. (1981); Shigaisen Koka Shisutemu (Ultraviolet Ray Curing Systems), written by Kiyoshi KATO and published by Sogo Gijutsu Center (1989); UV or EB Curing Handbook (Raw Material Volume), written by Kiyoshi KATO and published by Kobunshi Kankokai (1985); and Shin Kankosei Jushi No Jissai Gijutsu (New Actual Technology of Photosensitive Resin), written by Kiyoshi AKAMATSU and published by CMC Publishing Co., Ltd. (pages 102 to 145, (1987)). Specific examples thereof include (meth)acrylic acid or alkali or amine salts thereof, itaconic acid or alkali or amine salts thereof, 2-hydroxyethyl (meth)acrylate, hydroxypropyl (meth)acrylate, a phenolic hydroxyl group-containing monomer represented by the following formula (1), glycidyl methacrylate, allyl glycidyl ether, N-methylol methacrylamide, 2-methacryloyloxyethyl isocyanate, a block isocyanate group-containing monomer represented by the following formula (2), a vinyl alkoxysilane and a γ-methacryloxypropyl trialkoxysilane.

### Phenolic hydroxyl group-containing monomer (1)

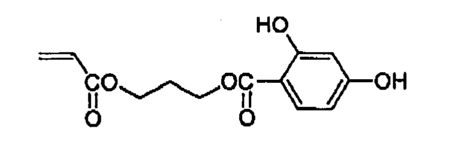

### Block isocyanate group-containing monomer (2)

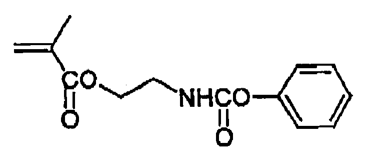

As these graft polymers, those having a mass average molecular weight of not more than 1,000,000 are preferably used. The molecular weight is more preferably in the range of from 1,000 to 1,000,000, and further preferably in the range of from 20,000 to 100,000. When the molecular weight is not more than 1,000,000, in preparing a coating solution for forming a hydrophilic film, the solubility in a solvent is not deteriorated, and there is no problem in handling such that the viscosity of the coating solution is low and that a uniform film is easily formed. Therefore, such is preferable.

The foregoing hydrophilic polymer has a hydrophilic functional group capable of revealing hydrophilicity as represented by Y in the formula. The higher the density of this functional group, the higher the surface hydrophilicity is, and therefore, such is favorable. The density of the hydrophilic functional group can be expressed by the molar number of the functional group per gram of the hydrophilic polymer and is preferably from 1 to 30 meq/g, more preferably from 2 to 20 meq/g, and most preferably from 3 to 15 meq/g.

The copolymerization ratio of the hydrophilic polymer (II) can be arbitrarily set up such that the amount of the hydrophilic functional group Y falls within the foregoing range. With respect to a molar ratio (m) of the monomer containing B and a molar ratio (n) of the monomer containing X, the range of m/n = 30/70 to 99/1 is preferable, the range of m/n = 40/60 to 98/2 is more preferable, and the range of m/n = 50/50 to 97/3 is the most preferable. When m is a ratio of m/n = 30/70 or more, the hydrophilicity is not insufficient. On the other hand, when n is a ratio of m/n = 99/1 or more, the amount of the reactive group is sufficient, sufficient curing is obtained, and the film strength is sufficient.

Specific examples (Illustrative Compounds (II)-1 to (II)-50) of the hydrophilic polymer represented by the formula (II), which can be favorably used in the invention, will be given below, but it should not be construed that the invention is limited thereto.

| | |
|---|---|
| (II)-(1) | 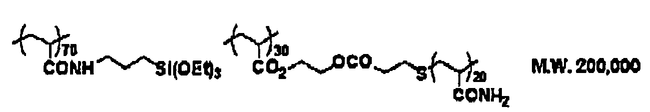 |
| (2) | 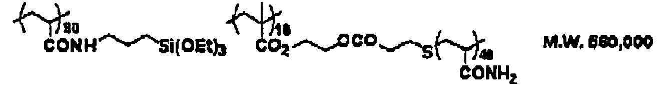 |
| (3) | 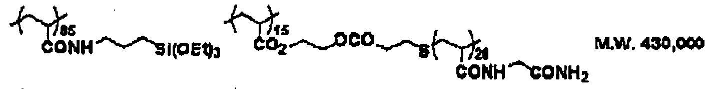 |
| (4) | 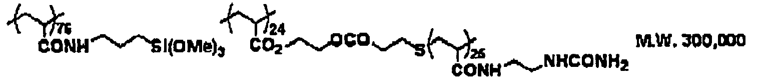 |
| (5) | 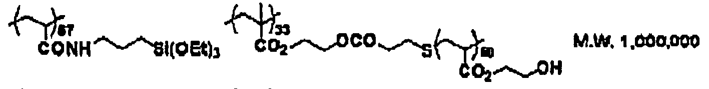 |
| (6) | 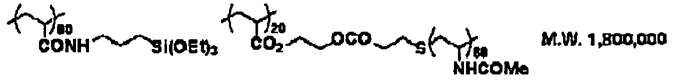 |
| (7) | 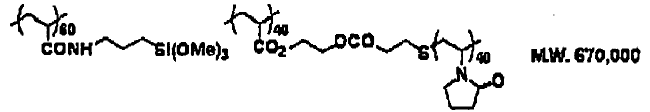 |
| (8) | 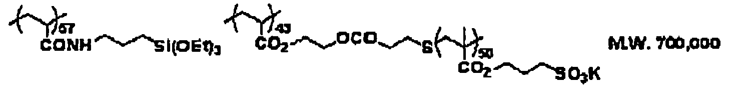 |
| (9) | 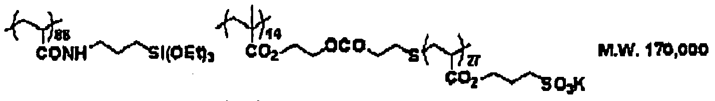 |
| (10) | 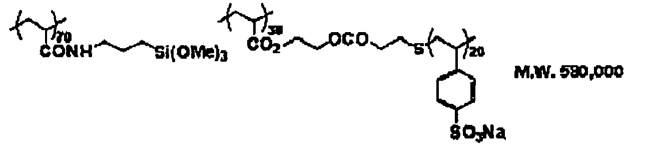 |
| (II)-(11) | 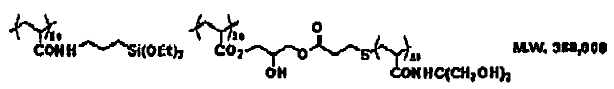 |
| (12) | 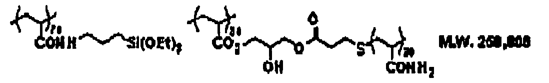 |
| (13) | 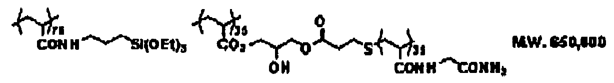 |
| (14) | 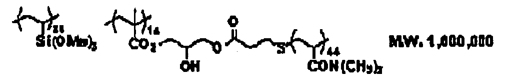 |
| (15) | 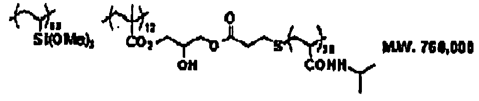 |
| (16) | 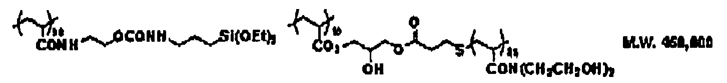 |
| (17) | 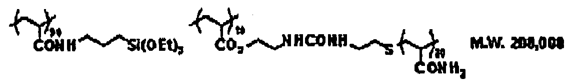 |
| (18) | 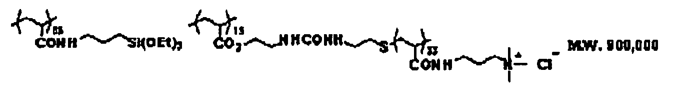 |
| (19) | 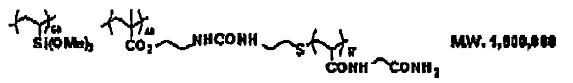 |
| (20) | 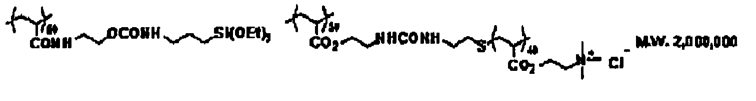 |
| (II)-(21) | 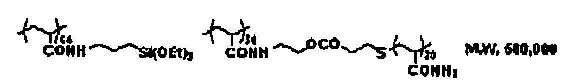 |
| (22) | 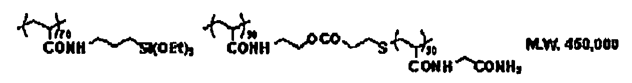 |
| (23) | 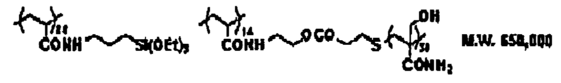 |
| (24) | 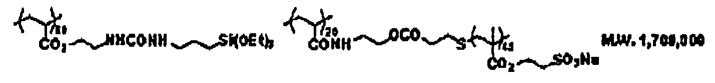 |
| (25) | 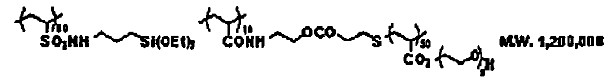 |
| (26) | 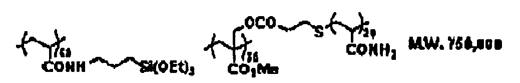 |
| (27) | 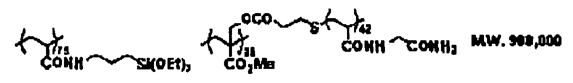 |
| (28) | 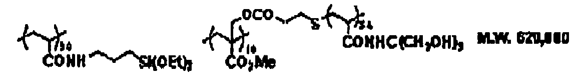 |
| (29) | 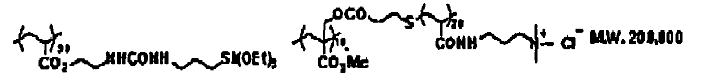 |
| (30) | 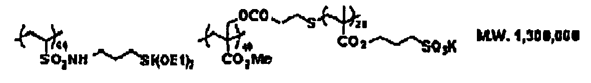 |
| (II)-(31) | 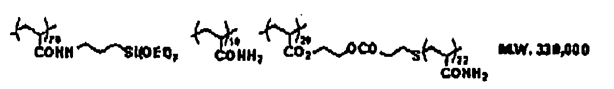 |
| (32) | 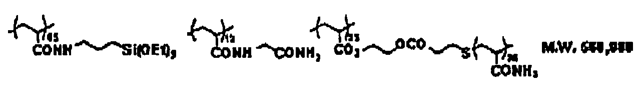 |
| (33) | 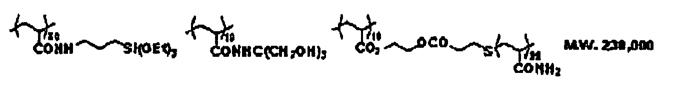 |
| (34) | 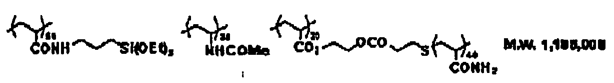 |
| (35) | 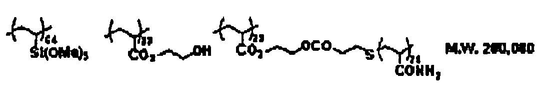 |
| (38) | 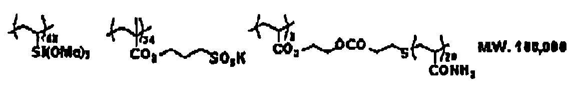 |
| (37) | 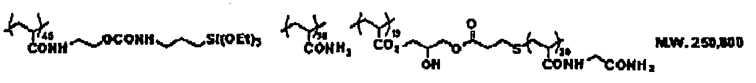 |
| (38) | 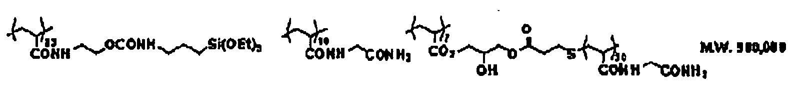 |
| (39) | 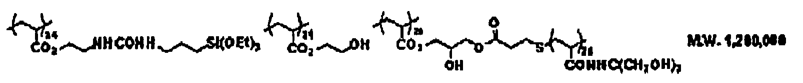 |
| (40) | 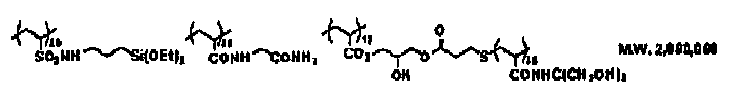 |
| (II)-(41) | 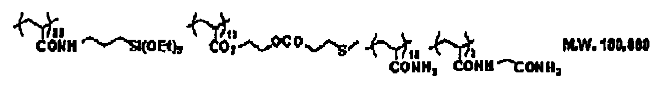 |
| (42) | 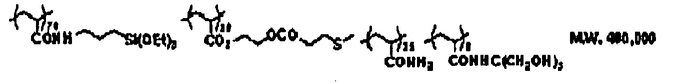 |
| (43) | 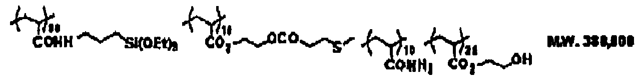 |
| (44) | 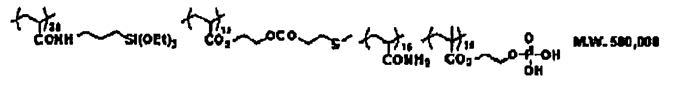 |
| (45) | 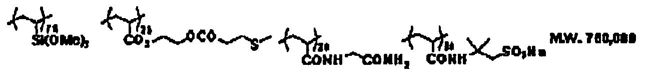 |
| (46) | 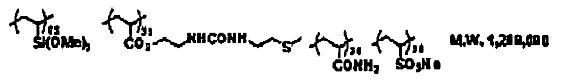 |
| (47) | 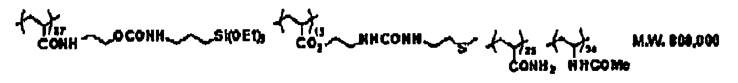 |
| (48) | 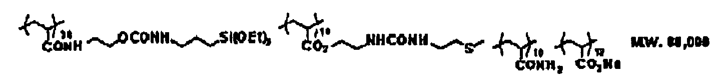 |
| (49) | 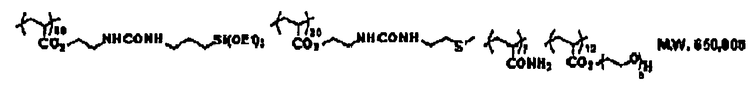 |
| (50) | 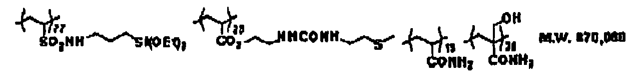 |

### (Hydrophilic polymer (III) having plural reactive groups)

In the foregoing formula (III), R⁷, R⁸, R⁹ and R¹⁰ each independently represents the same substituent as in R¹ and R² in the foregoing formula (I). L⁴ and L⁵ are each synonymous with L¹ in the foregoing formula (I). Y and X are the same as those in the formulae (I) and (II). In the invention, it is preferable that L⁴ represents a single bond or a connecting group having one or more structures selected from the group consisting of -CONH-, -NHCONH-, -OCONH-, -SO₂NH- and -SO₃- for the reason that high hydrophilicity is revealed.

A side chain-type silane polymer represented by the formula (III) is the most preferable because not only a large amount of the hydrolyzable silyl group per molecule can be introduced, but very good curing properties can be obtained by drying at ordinary temperature.

In the copolymerization ratio of the polymer represented by the formula (III), with respect to a molar ratio (m2) of the monomer containing Y and a molar ratio (n2) of the monomer containing X, when (m2 + n2) = 100, m2 is 50 or more, and preferably from 70 to 95. By making the molar ratio of the respective monomers fall within this range, there is brought an effect for revealing high film strength and hydrophilicity as well as high stability of the coating solution.

Specific examples (Illustrative Compounds (III)-(1) to (III)-(50)) of the polymer represented by the formula (III) will be given below along with mass average molecular weights (M.W.) thereof, but it should not be construed that the invention is limited thereto. The following polymers as specific examples are meant to be a random copolymer in which the structural units described herein are contained in a molar ratio as described.

| | |
|---|---|
| (III)-(1) | 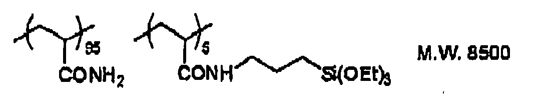 |
| (2) | 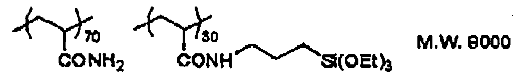 |
| (3) | 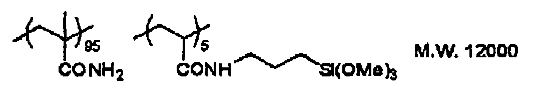 |
| (4) | 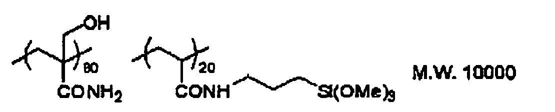 |
| (5) | 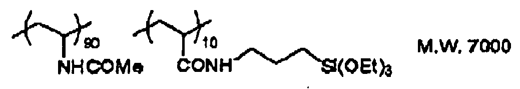 |
| (6) | 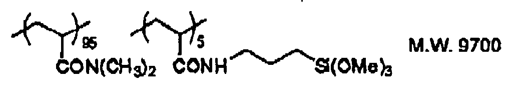 |
| (7) | 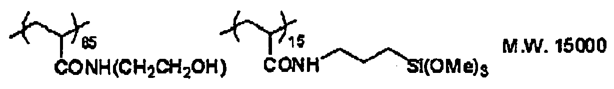 |
| (8) | 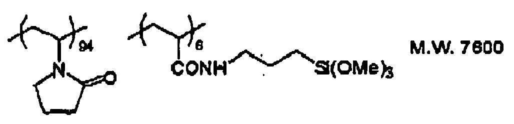 |
| (9) | 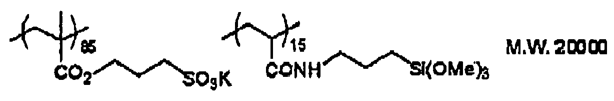 |
| (10) | 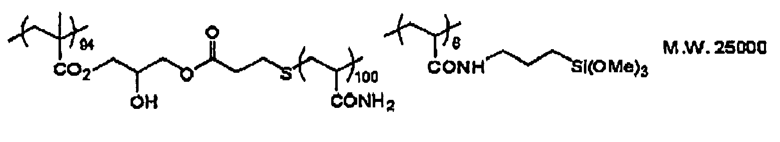 |
| (III)-(11) | 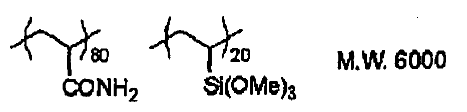 |
| (12) | 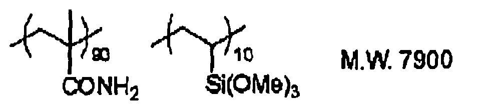 |
| (13) | 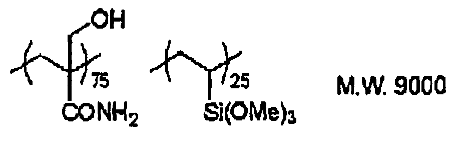 |
| (14) | 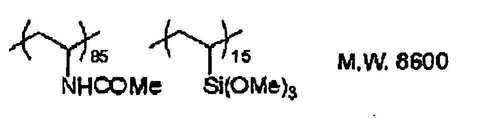 |
| (15) | 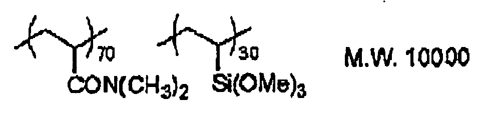 |
| (16) | 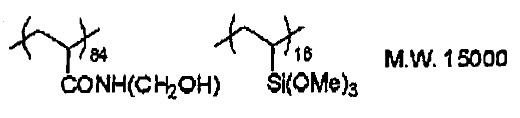 |
| (17) | 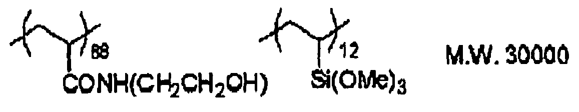 |
| (18) | 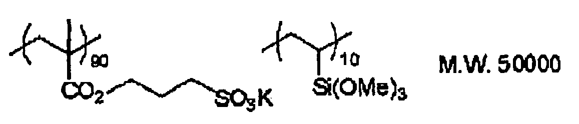 |
| (19) | 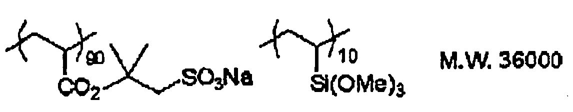 |
| (20) | 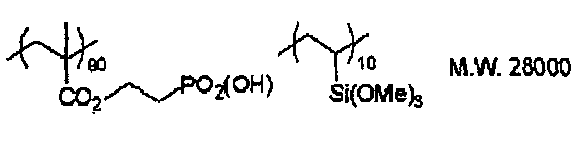 |
| (III)-(21) | 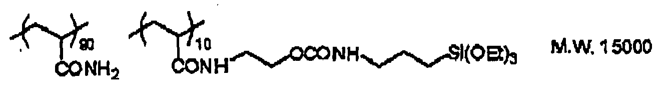 |
| (22) | 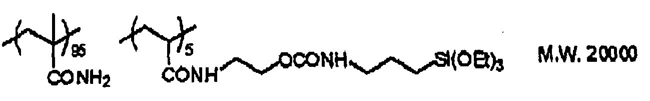 |
| (23) | 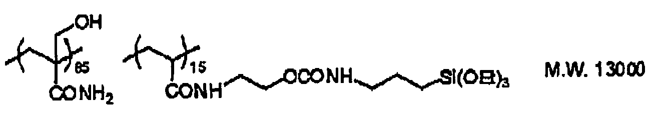 |
| (24) | 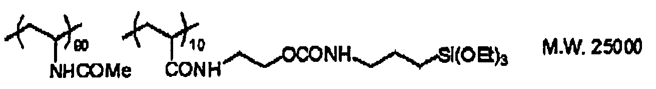 |
| (25) | 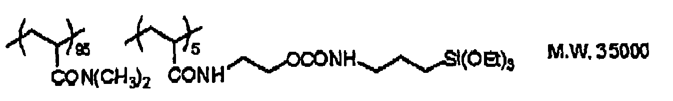 |
| (26) | 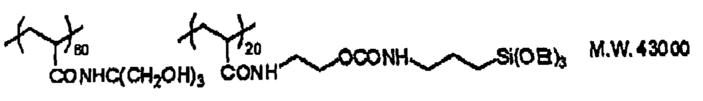 |
| (27) | 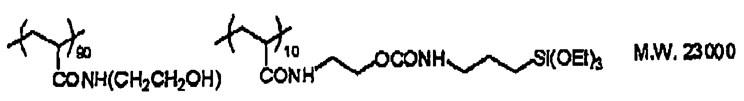 |
| (28) | 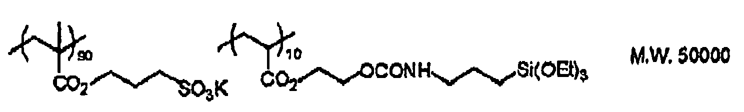 |
| (29) | 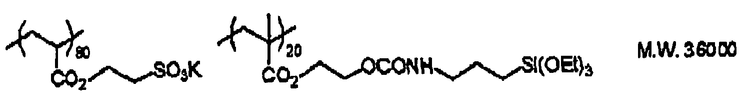 |
| (30) | 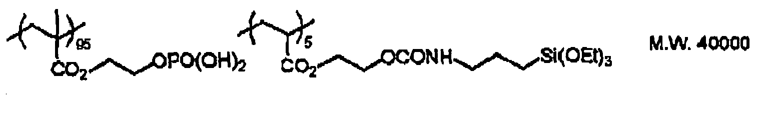 |
| (III)-(31) | 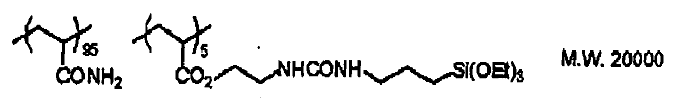 |
| (32) | 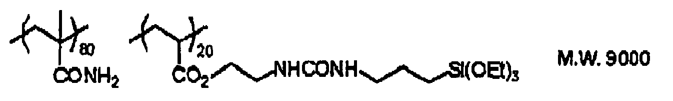 |
| (33) | 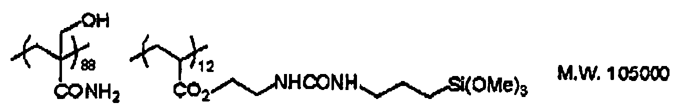 |
| (34) | 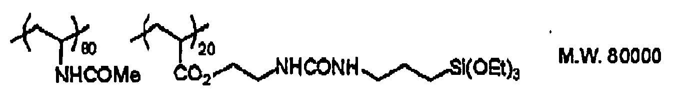 |
| (35) | 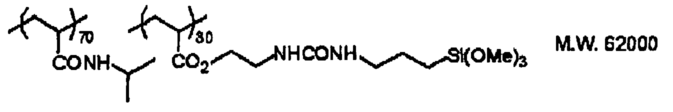 |
| (36) | 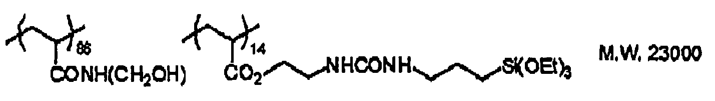 |
| (37) | 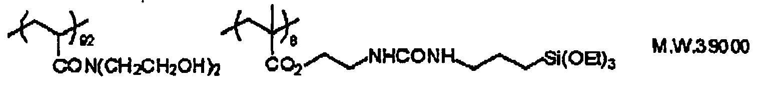 |
| (38) | 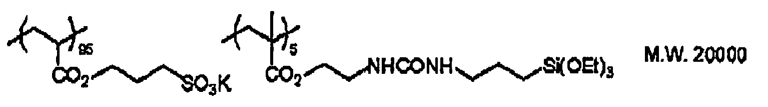 |
| (39) | 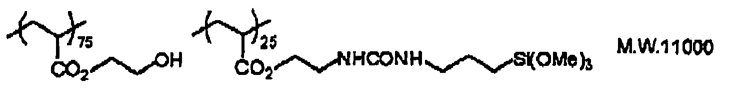 |
| (40) | 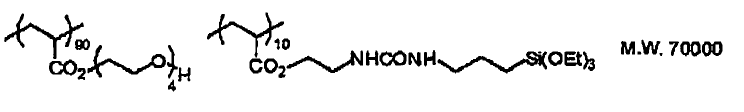 |
| (III)-(41) | 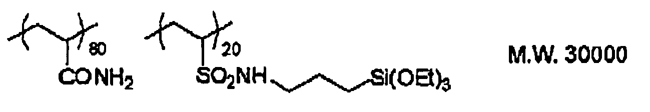 |
| (42) | 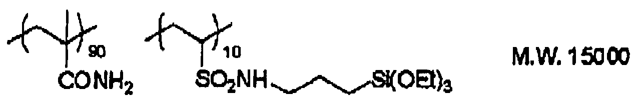 |
| (43) | 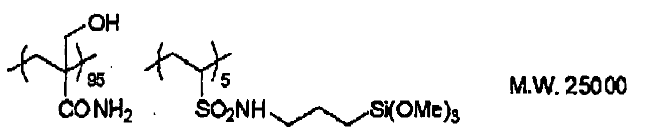 |
| (44) | 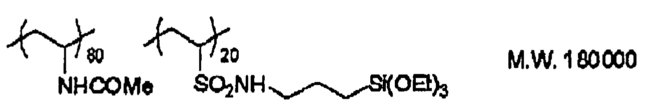 |
| (45) | 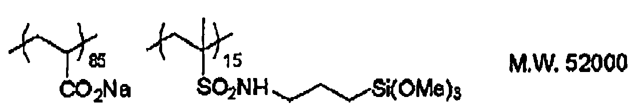 |
| (46) | 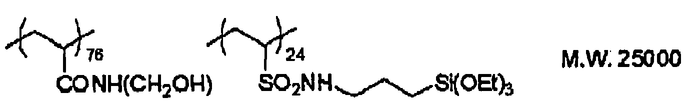 |
| (47) | 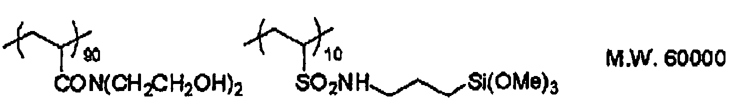 |
| (48) | 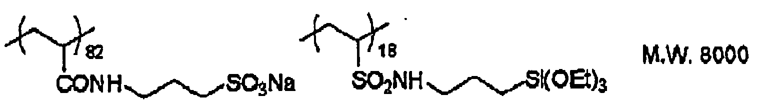 |
| (49) | 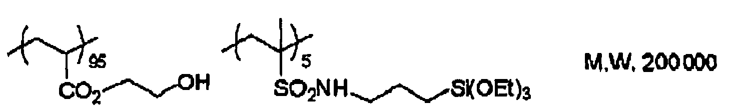 |
| (50) | 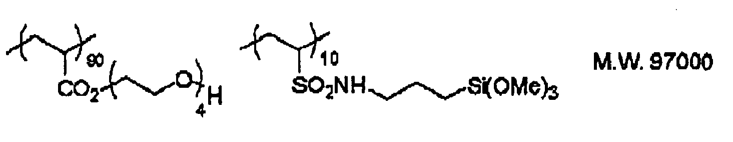 |

Each of the foregoing compounds for synthesizing the polymer represented by the formula (III) is commercially available and can be easily synthesized.

As the radical polymerization method for synthesizing the polymer represented by the formula (III), all of conventionally known methods can be employed. Concretely, the general radical polymerization method is described in, for example, Shin Kobunshi Jikken-gaku (New Polymer Experimentology) 3: Synthesis and Reaction I of Polymer (edited by The Society of Polymer Science, Japan and published by Kyoritsu Shuppan Co., Ltd.); Shin Jikken Kagaku Koza (New Experimental Chemistry Course) 19: Polymer Chemistry (I) (edited by The Chemical Society of Japan and published by Maruzen Co., Ltd.); and Busshitsu Kogaku Koza (Material Engineering Course): Polymer Synthesis Chemistry (published by Tokyo Denki University Press). These can be applied.

Also, the polymer represented by the formula (III) may be a copolymer with other monomer. Examples of other monomer which can be used include known monomers, for example, acrylic esters, methacrylic esters, acrylamides, methacrylamides, vinyl esters, styrenes, acrylic acid, methacrylic acid, acrylonitrile, maleic anhydride and maleic acid imide. By copolymerizing with such a monomer, various physical properties, for example, fabrication properties, film strength, hydrophilicity, hydrophobicity, solubility, reactivity and stability can be improved.

The mass average molecular weight of the polymer represented by the formula (III) is preferably from 1,000 to 1,000,000, more preferably from 1,000 to 500,000, and most preferably from 1,000 to 200,000.

The foregoing hydrophilic polymer forms a crosslinked film in a state that it is mixed with a hydrolysis and polycondensation product of the metal alkoxide. The hydrophilic polymer which is an organic component contributes to the film strength and film softness. In particular, when the viscosity of the hydrophilic polymer falls within the range of from 0.1 to 100 cPs (measured in a 5 % aqueous solution at 25 °C), preferably from 0.5 to 70 cPs, and more preferably from 1 to 50 cPs, good film physical properties are imparted.

The metal alkoxide which is used in the hydrophilic layer having a sol-gel crosslinking structure of the hydrophilic member of the invention is a hydrolyzable, polymerizable compound having a functional group which is polycondensable upon hydrolysis in a structure thereof and working a function as a crosslinking agent and when polycondensed with other metal alkoxide, forms a firm crosslinked film having a crosslinking structure. Furthermore, the metal alkoxide is chemically bonded to the foregoing hydrophilic polymer.

Examples of such a metal alkoxide include metal alkoxides the same as those exemplified in the foregoing undercoat layer.

The catalyst capable of hydrolyzing and polycondensing the foregoing metal alkoxide compound to cause bonding with the foregoing hydrophilic polymer, which is used in the hydrophilic layer having a sol-gel crosslinking structure of the hydrophilic member according to the first aspect of the invention, is not particularly limited. The non-volatile catalysts exemplified in the foregoing undercoat layer may be used. Besides, compounds exhibiting acidity, for example, hydrogen halides (for example, hydrochloric acid), nitric acid, sulfuric acid, sulfurous acid, hydrogen sulfide, perchloric acid, hydrogen peroxide, carboxylic acids (for example, carbonic acid, formic acid and acetic acid), substituted carboxylic acids in which R in a structural formula represented by RCOOH is substituted with other element or a substituent and sulfonic acids (for example, benzenesulfonic acid); basic compounds, for example, ammoniacal bases (for example, ammonia water) and amines (for example, ethylamine and aniline); and the like may be used. Of these, the non-volatile catalysts exemplified in the undercoat layer are preferable.

The catalyst capable of hydrolyzing and polycondensing the foregoing metal alkoxide compound to cause bonding with the foregoing hydrophilic polymer, which is used in the hydrophilic layer having a sol-gel crosslinking structure of the hydrophilic member according to the second aspect of the invention, is not particularly limited. The catalysts exemplified in the foregoing undercoat layer may be used.

Of these, the metal chelate compound and the silane coupling agent are preferable in view of efficiently carrying out hydrolysis and polycondensation of the metal alkoxide compound at a relatively low temperature. From the standpoints of improving the stability with time of a coating solution for hydrophilic layer and the coated surface quality of the hydrophilic layer and attaining high durability, the metal chelate compound is more preferable.

The hydrophilic layer of the invention may contain an inorganic fine particle for the purposes of enhancing the hydrophilicity, preventing cracks of the film and enhancing the film strength. Examples of the inorganic fine particle which is favorably used include silica, alumina, magnesium oxide, titanium oxide, magnesium carbonate, calcium alginate and mixtures thereof.

The inorganic fine particle preferably has an average particle size of from 5 nm to 10 µm, and more preferably from 0.5 to 3 µm. When the particle size of the inorganic fine particle falls within the foregoing range, it is possible to form a hydrophilic member with high durability and excellent hydrophilicity in which the inorganic fine particle is stably dispersed in the hydrophilic layer and the film strength of the hydrophilic layer is sufficiently kept.

Of the foregoing inorganic fine particles, a colloidal silica dispersion is especially preferable and is easily available as a commercial product.

The content of the inorganic fine particle is preferably not more than 80 % by mass, and more preferably not more than 50 % by mass relative to the whole solids content of the hydrophilic layer.

Various additives which can be used in the coating solution for forming a hydrophilic layer of the hydrophilic member of the invention as the need arises are hereunder described.

### (1) Surfactant:

A surfactant may also be added in the in the coating solution for forming a hydrophilic layer of the hydrophilic member of the invention.

As the surfactant, there are exemplified surfactants described in JP-A-62-173463 and JP-A-62-183457. Examples thereof include anionic surfactants (for example, dialkylsulfosuccinic acid salts, alkylnaphthalenesulfonic acid salts and fatty acid salts); nonionic surfactants (for example, polyoxyethylene alkyl ethers, polyoxyethylene alkylaryl ethers, acetylene glycols and polyoxyethylene-polyoxypropylene block copolymers); and cationic surfactants (for example, alkylamine salts and quaternary ammonium salts). An organic fluoro compound may be used in place of the foregoing surfactant. It is preferable that the foregoing organic fluoro compound is hydrophobic. Examples of the foregoing organic fluoro compound include fluorocarbon surfactants, oily fluorocarbon compounds (for example, fluorine oils) and solid fluorocarbon compound resins (for example, tetrafluoroethylene resins). Also, there are exemplified organic fluoro compounds as described in JP-B-57-9053 (columns 8 to 17) and JP-A-62-135826.

### (2) Ultraviolet ray absorber:

In the invention, an ultraviolet ray absorber can be used from the viewpoints of enhancing the weather resistance and durability of the hydrophilic member.

Examples of the ultraviolet ray absorber include benzotriazole based compounds described in JP-A-58-185677, JP-A-61-190537, JP-A-2-782, JP-A-5-197075 and JP-A-9-34057; benzophenone based compounds described in JP-A-46-2784, JP-A-5-194483 and U.S. Patent No. 3,214,463; cinnamic acid based compounds described in JP-B-48-303492, JP-B-56-21141 and JP-A-10-88106; triazine based compounds described in JP-A-4-298503, JP-A-8-53427, JP-A-8-239368, JP-A-10-182621 and JP-T-8-501291; compounds described in *Research Disclosure,* No. 24239; compounds capable of absorbing ultraviolet rays to emit fluorescence, as represented by stilbene based compounds and benzoxazole based compounds; and so-called fluorescent brighteners.

The addition amount of the ultraviolet ray absorber is properly selected depending upon the purpose, and in general, it is preferably from 0.5 to 15 % by mass as calculated as solids.

### (3) Antioxidant:

For the purpose of enhancing the stability of the hydrophilic member of the invention, an antioxidant can be added in the coating solution for forming a hydrophilic layer. Examples of the antioxidant include those described in EP-A-223739, EP-A-309401, EP-A-309402, EP-A-310551, EP-A-310552, EP-A-459416, DE-A-3435443, JP-A-54-262047, JP-A-63-113536, JP-A-63-163351, JP-A-2-262654, JP-A-2-71262, JP-A-3-121449, JP-A-5-61166, JP-A-5-119449 and U.S. Patent Nos. 4,814,262 and 4,980,275.

The addition amount of the antioxidant is properly selected depending upon the purpose and is preferably from 0.1 to 8 % by mass as calculated as solids.

### (4) Solvent:

At the formation of a hydrophilic layer of the hydrophilic member of the invention, for the purpose of ensuring the formability of a uniform film relative to the substrate, it is also effective to properly add an organic solvent in the coating solution for forming a hydrophilic layer.

Examples of the solvent include ketone based solvents (for example, acetone, methyl ethyl ketone and diethyl ketone); alcohol based solvents (for example, methanol, ethanol, 2-propanol, 1-propanol, 1-butanol and tert-butanol); chlorine based solvents (for example, chloroform and methylene chloride); aromatic solvents (for example, benzene and toluene); ester based solvents (for example, ethyl acetate, butyl acetate and isopropyl acetate); ether based solvents (for example, diethyl ether, tetrahydrofuran and dioxane); and glycol ether based solvents (for example, ethylene glycol monomethyl ether and ethylene glycol dimethyl ether).

In that case, it is effective to add the solvent in an amount within the range where problems in relation to VOC (volatile organic solvent) are not caused. Its amount is preferably in the range of from 0 to 50 % by mass, and more preferably from 0 to 30 % by mass relative to the whole of the coating solution at the formation of a hydrophilic member.

### (5) High-molecular weight compound:

For the purpose of adjusting film physical properties of the hydrophilic layer, various high-molecular weight compounds can be added in the coating solution for forming a hydrophilic layer of the hydrophilic member of the invention within the range where the hydrophilicity is not hindered. Examples of the high-molecular weight compound which can be used include acrylic polymers, polyvinyl alcohol resins, polyvinyl butyral resins, polyurethane resins, polyamide resins, polyester resins, epoxy resins, phenol resins, polycarbonate resins, polyvinyl formal resins, shellac, vinyl based resins, acrylic resins, rubber based resins, waxes and other natural resins. Such a high-molecular weight compound may be used in combination with two or more kinds thereof. Of these, vinyl based copolymers obtainable from copolymerization of an acrylic monomer are preferable, In addition, with respect to the copolymerization composition of a high-molecular weight binding material, copolymers containing, as a structural unit, a "carboxyl group-containing monomer", an "alkyl methacrylate" or an "alkyl acrylate" are also preferably used.

Besides, for example, a leveling additive, a matting agent, a wax for adjusting film physical properties and a tackifier for improving adhesion to the substrate within the hydrophilicity is not hindered can be contained as the need arises.

specific examples of the tackifier include high-molecular weight adhesive polymers described on pages 5 to 6 of JP-A-2001-49200 (for example, copolymers made of an ester of (meth)acrylic acid and an alcohol having an alkyl group having from 1 to 20 carbon atoms, an ester of (meth)acrylic acid and an alicyclic alcohol having from 3 to 14 carbon atoms and an ester of (meth)acrylic acid and an aromatic alcohol having from 6 to 14 carbon atoms); and low-molecular weight tackiness-imparting resins having a polymerizable unsaturated bond.

### [Base material]

The base material which is used in the invention is not particularly limited. Any of glasses, plastics, metals, ceramics, woods, stones, cements, concretes, fibers, textiles, papers, leathers, combinations thereof and stacks thereof can be favorably utilized. Of these, glass substrates and plastic substrates are especially preferable as the base material.

As the glass substrate, any of glasses, for example, soda glass, flint glass and boro-silicate glass may be used. Also, float sheet glass, figured sheet glass, ground sheet glass, wire glass, crosswire glass, tempered glass, laminated glass, multilayered glass, vacuum glass, security glass and high-heat insulating Low-E multilayered glass can be used depending upon the purpose. Though the foregoing hydrophilic layer can be provided on a raw sheet glass as it is, for the purpose of enhancing the adhesion of the hydrophilic layer, one surface or both surfaces of the sheet glass can be subjected to a surface hydrophilization treatment such as an oxidation method and a roughing method as the need arises. Examples of the oxidation method include a corona discharge treatment, a glow discharge treatment, a chromic acid treatment (wet type), a flame treatment, a hot blast treatment and an ozone or ultraviolet ray irradiation treatment. As the roughing method, mechanical roughing by sand blast, brush polishing, etc. can be applied.

The plastic substrate which is used in the invention is not particularly limited, and examples thereof include films or sheets made of a polyester, polyethylene, polypropylene, cellophane, triacetyl cellulose, diacetyl cellulose, acetyl cellulose butyrate, polyvinyl chloride, polyvinylidene chloride, polyvinyl alcohol, ethylene vinyl alcohol, polystyrene, a polycarbonate, polymethylpentene, polysulfone, polyether ketone, an acrylic resin, a nylon, a fluorocarbon resin, a polyimide, polyether imide, polyether sulfone, or the like. Of these, polyester films of polyethylene terephthalate, polyethylene naphthalate, etc. are preferable. From the optical standpoint, in many cases, plastic substrates with excellent transparency are preferable. Semi-transparent or printed plastic substrates are used depending upon the application. The thickness of the plastic substrate varies with a material to be stacked. For example, in a portion where a number of curved surfaces are present, a thin plastic substrate is favorable, and one having a thickness of from about 6 to 50 µm is used. When the plastic substrate is used for a flat surface or is required to have a strength, one having a thickness of from 50 to 400 µm is useful.

For the purpose of enhancing the adhesion between the base material and the undercoat layer, one surface or both surfaces of the base material can be subjected to a surface hydrophilization treatment such as an oxidation method and a roughing method, if desired. Examples of the foregoing oxidation method include a corona discharge treatment, a glow discharge treatment, a chromic acid treatment (wet type), a flame treatment, a hot blast treatment and an ozone or ultraviolet ray irradiation treatment. As the roughing method, mechanical roughing by sand blast, brush polishing, etc. can be applied.

### [Layer configuration at the use of hydrophilic member]

When the hydrophilic member of the invention is used while expecting an effect for revealing antifouling properties and/or anti-fogging properties, it can be used upon proper addition of other layers depending upon the purpose, form or use place. The layer configuration which is added as the need arises is hereunder described.

### (1) Adhesive layer:

When the hydrophilic member of the invention is stuck on another base material and used, an adhesive which is a pressure-sensitive adhesive is favorably used as an adhesive layer. As the adhesive, adhesives which are generally used for an adhesive sheet, for example, rubber based adhesives, acrylic adhesives, silicone based adhesives, vinyl ether based adhesives and styrene based adhesives can be used.

When optical transparency is required, adhesives useful for an optical application are selected. When coloration, semi-transparency or a pattern with a mat tone is required, it is possible to bring the effect by adding a dye or an organic or inorganic fine particle to the adhesive in addition to patterning on the base material.

When a tackifier is required, a tackiness-imparting resin, for example, rosin based resins, terpene based resins, petroleum resins, styrene based resins and hydrogenation products thereof can be used singly or in admixture.

The adhesive strength of the adhesive which is used in the invention is of generally called strong adhesion and is 200 g/25 mm or more, preferably 300 g/25 mm or more, and more preferably 400 g/25 mm or more. The "adhesive strength" as referred to herein is a value as measured by a 180-degree peeling test according to JIS Z0237.

### (2) Release layer:

When the hydrophilic member of the invention has the foregoing adhesive layer, a release layer can be further added. In order to bring release properties, it is preferable that a release agent is contained in the release layer. As the release agent, in general, silicone based release agents composed of a polyorganosiloxane, fluorocarbon compounds, long-chain alkyl-modified products of polyvinyl alcohol, long-chain alkyl-modified production of polyethyleneimine, and the like can be used. Also, various release agents, for example, hot melt type release agents and monomer type release agents capable of curing a releasable monomer by means of radical polymerization, cationic polymerization, polycondensation reaction, etc. and besides, copolymer based resins, for example, acryl-silicone based copolymer resins, acryl-fluorocarbon copolymer resins and urethane-silicone-fluorocarbon copolymer resins, resin blends of a silicone based resin and an acrylic resin and resin blends of a fluorocarbon resin and an acrylic resin are useful. Also, a hard coat release layer obtained by curing a curable composition containing any one of a fluorine atom and/or a silicon atom and an active energy ray-polymerizable group-containing compound may be formed.

### (3) Other layers:

A passivation layer may be provided on the hydrophilic layer. The passivation layer has a function for preventing injuring on the hydrophilic surface at the handling, shipment or storage or the like or deterioration of the hydrophilicity due to the attachment of a staining substance. As the passivation layer, the hydrophilic polymer layer used in the foregoing release layer can be used. The passivation layer is peeled away after sticking the hydrophilic member onto an adequate base material.

### [Form of structure]

The structure having the hydrophilic layer of the invention may be fed in a sheet-like form, roll-like form or ribbon-like form. For the purpose of sticking onto an adequate base material, the structure may be fed in a form in which it is previously cut.

### [Surface free energy]

The degree of hydrophilicity of the hydrophilic layer surface is in general measured in terms of a droplet contact angle. However, with respect to a surface with very high hydrophilicity as in the invention, there is a possibility that the droplet contact angle is not more than 10 degrees, and even not more than 5 degrees. Thus, in mutually comparing the degree of hydrophilicity, there is a limit. On the other hand, examples of a method for evaluating the degree ofhydrophilicity on a solid surface in detail include a measurement of surface free energy. There are proposed various methods. In the invention, however, the surface free energy was measured by employing the Zisman plot method as one example. Concretely, the Zisman plot method is a measurement method in which by utilizing the properties that in an aqueous solution of an inorganic electrolyte, for example, magnesium chloride, its surface tension becomes large with an increase of the concentration thereof, a contact angle is measured in air under a room temperature condition by using the aqueous solution; a surface tension of the aqueous solution is taken on the abscissa, whereas a value obtained by reducing the contact angle into cos θ is taken on the ordinate; points of the aqueous solution of various concentrations are plotted to obtain a linear relationship; and the surface tension at cos θ = 1, namely at a contact angle = 0° is defined as surface free energy of the solid. The surface tension of water is 72 mN/m, and it may be said that the larger the value of surface free energy, the higher the hydrophilicity is.

The hydrophilic layer in which the surface free energy as measured in such a method is in the range of from 70 mN/m to 95 mN/m, preferably from 72 mN/m to 93 mN/m, and more preferably from 75 mN/m to 90 mN/m is excellent in hydrophilicity and exhibits a satisfactory performance.

When the hydrophilic member having a hydrophilic film provided therein according to the invention is applied (used and stuck) for a window glass or the like, the transparency is important from the viewpoint of securing the visibility. The hydrophilic film of the invention is excellent in transparency, and even when the film thickness is thick, it is possible to make it compatible with durability without hindering the degree of transparency. The thickness of the hydrophilic film of the invention is preferably from 0.01 µm to 100 µm, more preferably from 0.05 µm to 50 µm, and most preferably from 0.1 µm to 20 µm. What the film thickness is 0.01 µm or more is preferable because sufficient hydrophilicity and durability are obtained; and what the film thickness is not more than 100 µm is also preferable because problems in fabrication properties, for example, the generation of cracks are not caused.

The transparency is evaluated by measuring a light transmittance in a visible light region (from 400 nm to 800 nm) by a spectrophotometer. The light transmittance is preferably in the range of from 100 % to 70 %, more preferably from 95 % to 75 %, and most preferably from 95 % to 80 %. When the light transmittance falls within this range, the hydrophilic member having a hydrophilic film provided therein can be applied to various applications without disturbing the visibility.

The hydrophilic member of the invention can be obtained by coating the foregoing undercoat layer with a coating solution composition for forming a hydrophilic layer and heating and drying the composition to form a surface hydrophilic layer. The heating temperature and heating time for forming a hydrophilic layer are not particularly limited so far as the solvent in the sol liquid can be removed and a firm film can be formed. In view of manufacture aptitude and the like, the heating temperature is preferably no higher than 150 °C, and the heating time is preferably within one hour.

The hydrophilic layer in the hydrophilic member of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush and painting with a sponge.

For example, when an anti-fogging effect is expected, a material to which the hydrophilic member of the invention can be applied is a transparent material. Examples thereof include a transparent glass substrate, a transparent plastic substrate, a lens, a prism and a mirror.

As the glass, any of glasses, for example, soda glass, flint glass and boro-silicate glass may be used. Also, float sheet glass, figured sheet glass, ground sheet glass, wire glass, crosswire glass, tempered glass, laminated glass, multilayered glass, vacuum glass, security glass and high-heat insulating Low-E multilayered glass can be used depending upon the purpose.

Examples of applications to which the member having an anti-fogging effect can be applied include mirrors (for example, a vehicle rearview mirror, a bathroom mirror, a washroom mirror, a dental mirror and a road mirror); lenses (for example, a spectacle lens, an optical lens, a camera lens, an endoscope lens, a lighting lens, a semiconductor lens and a copier lens); prisms; window glasses of a building or a watchtower; other building material lenses; window glasses of various vehicles, for example, an automobile, a railway vehicle, an aircraft, a boat, a submersible, a snow vehicle, a gondola of ropeway and a gondola of amusement park; windshields of various vehicles, for example, an automobile, a railway vehicle, an aircraft, a boat, a submersible, a snow vehicle, a snowmobile, a motorcycle, a gondola of ropeway and a gondola of amusement park; protective goggles, sporting goggles, shields for protective mask, shields for sporting mask, shields of helmet and glasses of display case of frozen foods; cover glasses of measuring instrument; and films to be stuck on the surfaces of the foregoing articles. The most preferable application is an automobile or building glass.

Also, when the surface hydrophilic member of the invention is expected to have an antifouling effect, for example, in addition to glasses and plastics, any of metals, ceramics, woods, stones, cements, concretes, fibers, textiles, papers, combinations thereof and stacks thereof can be favorably utilized as the base material.

Examples of applications to which the member having an antifouling effect can be applied include building materials, building exteriors such as outer walls and roofs, building interiors, window frames, window glasses, structural members, exteriors and paints of vehicles, for example, automobiles, railway vehicles, aircrafts, boats, bicycles and motorcycles, exteriors of machine apparatus and articles, dustproof covers and paints, traffic sings, various display devices, advertising columns, road noise-blocking walls, railway noise-blocking walls, bridges, exteriors and pains of guardrail, tunnel interiors and paints, insulators, solar battery covers, heat collecting covers of solar water heater, vinyl green houses, covers of vehicular lamp, residential facilities, toilet stools, bathtubs, washing sinks, luminairs, luminair covers, kitchen utensils, dishes, dish washers, dish driers, kitchen sinks, cooking microwave ovens, kitchen hoods, ventilation fans and films to be stuck onto surfaces of the foregoing articles.

The applications also include signboards, traffic sings, noise-proof walls, vinyl green houses, insulators, vehicle covers, tent materials, reflectors, shutters, screens, solar battery covers, heat collecting covers of solar water heater, etc., outdoor lamps, pavements, outdoor lightings, stones or tiles for artificial fall or artificial fountain, bridges, greenhouses, outer wall materials, wall-to-wall or glass-to-glass sealers, guardrails, verandas, vending machines, outdoor units of air conditioner, outdoor benches, various display apparatus, shutters, tollhouses, charge boxes, roof gutters, protective covers for vehicle lamp, dustproof covers and paints, paints of machine apparatus and articles, exteriors and paints of advertising column, structural members, residential facilities, toilet stools, bathtubs, washing sinks, luminairs, kitchen utensils, dishes, dish driers, kitchen sinks, cooking microwave ovens, kitchen hoods, ventilation fans, window rails, window frames, tunnel interiors, tunnel lightings, window sashes, heat radiation fans for heat exchanger, pavements, mirrors for bathroom or washroom, vinyl green house ceilings, washstands, automobile bodies, films to be stuck onto the foregoing articles and stickers.

The surface hydrophilic member of the invention is also applicable to roof materials for snowy district, antennas, power transmission lines, and the like. On that occasion, an excellent characteristic in snow accretion-preventing properties is obtained.

### EXAMPLES

The invention is hereunder described in detail with reference to the following Examples, but it should not be construed that the invention is limited thereto.

### Example 1

A float sheet glass (thickness: 2 mm) which is the most general transparent sheet glass was prepared; a surface of the sheet glass was hydrophilized by a UV/O₃ treatment for 10 minutes; and a coating solution for first layer having the following composition was then spin coated and dried in an oven at 100 °C for 10 minutes, thereby forming a first layer with a dry coating amount of 1.0 g/m². After thoroughly cooling at room temperature, a coating solution for second layer having the following composition was spin coated on the coated surface of the first layer and dried in an oven at 100 °C for 10 minutes, thereby forming a second layer with a dry coating amount of 1.0 g/m². This hydrophilic member had surface free energy of 87 mN/m and had a surface with very high hydrophilicity. The hydrophilic layer had a visible light transmittance of 90 % (measured by a spectrophotometer, U3000, manufactured by Hitachi, Ltd.).

| <Coating solution for first layer> | |
|---|---|
| • 20 % by mass aqueous solution of colloidal silica dispersion (SNOWTEX C): | 100 g |
| • Sol-gel preparation liquid (1) as described below: | 500 g |
| • 5 % by mass aqueous solution of anionic surfactant as described below: | 30 g |
| • Purified water: | 450 g |

| <Coating solution for second layer> | |
|---|---|
| • 20 % by mass aqueous solution of colloidal silica dispersion (SNOWTEX C): | 100 g |
| • Sol-gel preparation liquid (2) as described below: | 500 g |
| • 5 % by mass aqueous solution of anionic surfactant as described below: | 30 g |
| • Purified water: | 450 g |

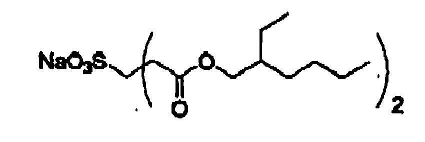

### <Sol-gel preparation liquid (1)>

8 g of tetramethoxysilane (manufactured by Tokyo Chemical Industry Co., Ltd.) was mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation liquid (1).

### <Sol-gel preparation liquid (2)>

8 g of tetramethoxysilane (manufactured by Tokyo Chemical Industry Co., Ltd.) and 5 of a hydrophilic polymer having a silane coupling group at a terminal end thereof as described below were mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation liquid (2).

### <Synthesis of hydrophilic polymer having a silane coupling group at a terminal end thereof>

A three-necked flask was charged with 25 g of acrylamide, 3.5 g of 3-mercaptopropyl trimethoxysilane and 51.3 g of dimethylformamide, and the mixture was heated to 65 °C under a nitrogen gas stream, to which was then added 0.25 g of 2,2'-azobis(2,4-dimethylvaleronitrile) to start a reaction. After stirring for 6 hours, the reaction mixture was returned to room temperature and then thrown into 1.5 L of ethyl acetate. As a result, a solid was deposited. Thereafter, filtration was carried out, and the residue was thoroughly washed with ethyl acetate and dried (yield: 21 g). As a result of GPC (by using a polystyrene standard solution), the product was confirmed to be a polymer having a mass average molecular weight of 4,000. The viscosity of a 5 % aqueous solution of the polymer was 2.5 cPs, and the density of a functional group as the hydrophilic group was 13.4 meq/g.

### (Evaluation)

The foregoing hydrophilic member was evaluated as follows.

### Hydrophilicity:

A droplet contact angle in air was measured (by using Drop Master 500, manufactured by Kyowa Interface Science Co., Ltd.).

### Durability and abrasion test:

The hydrophilic member was rubbed with a non-woven fabric (BEMCO, manufactured by Asahi Chemical Fiber Co., Ltd.) 200 times while applying a load of 100 g, 200 g, 500 g and 1,000 g, successively, thereby evaluating a load at which the hydrophilic surface was injured. Even if the load is large, when the hydrophilic surface is not injured, the durability is good.

### Scratch test:

A sapphire stylus having a diameter of 0.1 mm was scanned on the surface of the hydrophilic layer by applying a load while increasing a weight of every 5 g starting from 5 g, thereby evaluating a load at which the hydrophilic surface was injured (measured by a scratch strength tester, Type 18S, manufactured by Shinto Scientific Co., Ltd.). Even if the load is large, when the hydrophilic surface is not injured, the durability is good.

As a result, when the droplet contact angle was not more than 5 degrees, the hydrophilicity was very good. In the abrasion test, the hydrophilic surface was not injured at a load of up to 200 g; and in the scratch test, the hydrophilic surface was not injured at a load of up to 100 g. Thus, the hydrophilic member was excellent in durability.

### Example 2

A hydrophilic layer was prepared in the same manner as in Example 1, except for adding 10 g of an amino group-containing silane coupling agent (KBM603, manufactured by Shin-Etsu Silicones Co., Ltd.) in place of the tetraethyl orthotitanate of the sol-gel preparation liquid (1). The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 100 g. Thus, the hydrophilic member was excellent in durability.

### Example 3

A hydrophilic layer was prepared in the same manner as in Example 1, except for changing the drying time of the coating solution for first layer to 5 minutes. The resulting hydrophilic member had a droplet contact angle of not more than 5 degrees and was high in hydrophilicity. In the abrasion test, the hydrophilic surface was not injured at a load of up to 500 g; and in the scratch test, the hydrophilic surface was not injured at a load of up to 140 g. Thus, the hydrophilic member was excellent in durability.

### Example 4

A hydrophilic layer was prepared in the same manner as in Example 1, except for changing the drying time of the coating solution for first layer to 2 minutes. The resulting hydrophilic member had a droplet contact angle of not more than 5 degrees and was high in hydrophilicity. In the abrasion test, the hydrophilic surface was not injured at a load of up to 1,000 g; and in the scratch test, the hydrophilic surface was not injured at a load of up to 200 g. Thus, the hydrophilic member was excellent in durability.

### Example 5

A hydrophilic film was prepared in the same manner as in Example 1, except for changing the catalyst of the sol-gel liquid of the coating solution for first layer to tetraisopropoxyzirconium (manufactured by Aldrich Chemical Company, Inc.). The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 100 g. Thus, the hydrophilic member was excellent in durability.

### Example 6

A hydrophilic layer was prepared in the same manner as in Example 5, except for changing the drying time of the coating solution for first layer to 2 minutes. The resulting hydrophilic member had a droplet contact angle of not more than 5 degrees and was high in hydrophilicity. In the abrasion test, the hydrophilic surface was not injured at a load of up to 1,000 g; and in the scratch test, the hydrophilic surface was not injured at a load of up to 200 g. Thus, the hydrophilic member was excellent in durability.

### Example 7

An undercoat layer and a hydrophilic layer were provided in the same manner as in Example 1, except for using, as the substrate, a commercially available glass mirror (400 x 300 mm) which had been washed with an alcohol. There was thus prepared a hydrophilic member. The resulting hydrophilic member had the same hydrophilicity and durability as in Example 1.

### Example 8

A hydrophilic film was prepared in the same manner as in Example 1, except for using a hydrophilic polymer having a silane coupling group in a side chain thereof in place of the hydrophilic polymer having a silane coupling agent at a terminal end thereof. The resulting hydrophilic member had a droplet contact angle of not more than 5 degrees and was high in hydrophilicity. In the abrasion test, the hydrophilic surface was not injured at a load of up to 1,000 g; and in the scratch test, the hydrophilic surface was not injured at a load of up to 250 g. Thus, the hydrophilic member was excellent in durability.

### <Synthesis of hydrophilic polymer having a silane coupling group in a side chain thereof>

A 500-mL three-necked flask was charged with 13.9 g of acrylamide, 11.6 g of acrylamido-3-(ethoxysilyl)propyl and 280 g of 1-methoxy-2-propanol, to which was then added 1.8 g of dimethyl 2,2'-azobis(2-methylpropionate) under a nitrogen gas stream at 80 °C. After keeping at the same temperature for 6 hours while stirring, the mixture was cooled to room temperature. The resulting mixture was thrown into two liters of acetone, and a deposited solid was collected by filtration. The resulting solid was washed with acetone, thereby obtaining a hydrophilic polymer (2). The mass after drying was 23.3 g. As a result of GPC (by using a polyethylene oxide standard solution), the product was confirmed to be a polymer having a mass average molecular weight of 15,000.

Evaluation results of the hydrophilic members of Examples 1 to 8 are summarised and shown in the following Table 1.

**Table 1**

| | Contact angle (°) | Abrasion test (g) | Scratch test (g) |
|---|---|---|---|
| Example 1 | 2.5 | 200 | 100 |
| Example 2 | 2.3 | 200 | 100 |
| Example 3 | 2.2 | 500 | 140 |
| Example 4 | 2.2 | 1,000 | 200 |
| Example 5 | 2.4 | 200 | 100 |
| Example 6 | 2.2 | 1,000 | 200 |
| Example 7 | 2.5 | 200 | 100 |
| Example 8 | 2.3 | 1,000 | 250 |

### Comparative Example 1

A hydrophilic layer was prepared in the same manner as in Example 1, except for changing the catalyst of the sol-gel liquid of the coating solution for first layer to 1.5 g of a 1 N nitric acid aqueous solution (nitric acid catalyst, boiling point: 120 °C). With respect to the resulting hydrophilic member, in the abrasion test, the hydrophilic surface was not injured at a load of up to 100 g. In the scratch test, the hydrophilic surface was injured at a load of 55 g. Thus, the hydrophilic member was not sufficient in durability.

### Comparative Example 2

A hydrophilic film was prepared in the same manner as in Example 1, except for using only the coating solution for second layer but not using the coating solution for first layer. The resulting hydrophilic member had a droplet contact angle of not more than 5 degrees and was high in hydrophilicity. In the abrasion test, the hydrophilic surface was injured even at a load of 100 g. In the scratch test, the hydrophilic surface was injured at a load of 20 g. Thus, the hydrophilic member was not sufficient in durability.

Evaluation results of the hydrophilic members of Comparative Examples 1 to 2 are summarized and shown in the following Table 2.

**Table 2**

| | Contact angle | Abrasion test | Scratch test |
|---|---|---|---|
| Comparative Example 1 | 2.3° | 100 g | 30 g |
| Comparative Example 2 | 2.4° | 100 g | 20 g |

As is evident from the foregoing results, the hydrophilic member of the invention having an undercoat layer containing a non-volatile catalyst between a base material and a hydrophilic layer was excellent in durability of the hydrophilic layer.

### Example 9

A float sheet glass (thickness: 2 mm, SiO₂ concentration: 70 wt%) which is the most general transparent sheet glass was prepared; a surface of the sheet glass was hydrophilized by a UV/O₃ treatment for 10 minutes; and a coating solution for first layer having the following composition was then spin coated and dried in an oven at 100 °C for 10 minutes, thereby forming a first layer with a dry coating amount of 1.0 g/m². After thoroughly cooling at room temperature, a coating solution for second layer having the following composition was spin coated on the coated surface of the first layer and dried in an oven at 100 °C for 10 minutes, thereby forming a second layer with a dry coating amount of 1.0 g/m². This hydrophilic member had surface free energy of 87 mN/m and had a surface with very high hydrophilicity. The hydrophilic layer had a visible light transmittance of 90 % (measured by a spectrophotometer, U3000, manufactured by Hitachi, Ltd.).

The first layer had an Si-OH/Si ratio of 0.80 (measured by TOF-SIMS, manufactured by ION-TOF GmbH).

The first layer had an Ra of 1.6 (measured in a DFM mode at a scanning rate of from 1 to 2 Hz at a contact pressure of from 10 to 20 % by using SPA400, manufactured by SII Nano Technology Inc. and a probe, SI-DF20, manufactured by SII Nano Technology Inc.).

| <Coating solution for first layer> | |
|---|---|
| • 20 % by mass aqueous solution of colloidal silica dispersion (SNOWTEX C): | 100 g |
| • Sol-gel preparation liquid (1) as described below: | 500 g |
| • 5% by mass aqueous solution of anionic surfactant as described below: | 30 g |
| • Purified water: | 450 g |

| <Coating solution for second layer> | |
|---|---|
| • 20 % by mass aqueous solution of colloidal silica dispersion (SNOWTEX C): | 100 g |
| • Sol-gel preparation liquid (2) as described below: | 500 g |
| • 5 % by mass aqueous solution of anionic surfactant as described below: | 30 g |
| • Purified water: | 450 g |

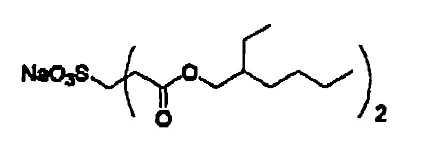

### <Sol-gel preparation liquid (1)>

8 g of tetramethoxysilane (manufactured by Tokyo Chemical Industry Co., Ltd.) was mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation liquid (1).

### <Sol-gel preparation liquid (2)>

8 g of tetramethoxysilane (manufactured by Tokyo Chemical Industry Co., Ltd.) and 5 of a hydrophilic polymer having a silane coupling group at a terminal end thereof as described below were mixed in 200 g of ethyl alcohol, 10 g of acetylacetone, 10 g of tetraethyl orthotitanate and 100 g of purified water, and the mixture was stirred at room temperature for 2 hours to prepare a sol-gel preparation liquid (2).

### <Synthesis of hydrophilic polymer having a silane coupling group at a terminal end thereof>

A three-necked flask was charged with 25 g of acrylamide, 3.5 g of 3-mercaptopropyl trimethoxysilane and 51.3 g of dimethylformamide, and the mixture was heated to 65 °C under a nitrogen gas stream, to which was then added 0.25 g of 2,2'-azobis(2,4-dimethylvaleronitrile) to start a reaction. After stirring for 6 hours, the reaction mixture was returned to room temperature and then thrown into 1.5 L of ethyl acetate. As a result, a solid was deposited. Thereafter, filtration was carried out, and the residue was thoroughly washed with ethyl acetate and dried (yield: 21 g). As a result of GPC (by using a polystyrene standard solution), the product was confirmed to be a polymer having a mass average molecular weight of 4,000. The viscosity of a 5 % aqueous solution of the polymer was 2.5 cPs, and the density of a functional group as the hydrophilic group was 13.4 meq/g.

### (Evaluation)

The foregoing hydrophilic member was evaluated as follows.

### Hydrophilicity:

A droplet contact angle in air was measured (by using Drop Master 500, manufactured by Kyowa Interface Science Co., Ltd.).

### Durability and abrasion test:

The hydrophilic member was rubbed with a non-woven fabric (BEMCO, manufactured by Asahi Chemical Fiber Co., Ltd.) 200 times while applying a load of 100 g, 200 g, 500 g and 1,000 g, successively, thereby evaluation a load at which the hydrophilic surface was injured. Even if the load is large, when the hydrophilic surface is not injured, the durability is good.

### Scratch test:

A sapphire stylus having a diameter of 0.1 mm was scanned on the surface of the hydrophilic layer by applying a load while increasing a weight of every 5 g starting from 5 g, thereby evaluating a load at which the hydrophilic surface was injured (measured by a scratch strength tester, Type 18S, manufactured by Shinto Scientific Co., Ltd.). Even if the load is large, when the hydrophilic surface is not injured, the durability is good.

As a result, when the droplet contact angle was not more than 5 degrees, the hydrophilicity was very good. In the abrasion test, the hydrophilic surface was not injured at a load of up to 200 g; and in the scratch test, the hydrophilic surface was not injured at a load of up to 100 g. Thus, the hydrophilic member was excellent in durability.

### Example 10

A hydrophilic layer was prepared in the same manner as in Example 9, except for changing the drying temperature of the coating solution for first layer to 80 °C. The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 150 g.

The undercoat layer had an Si-OH/Si of 0.88 and an Ra of 1.6 nm.

### Example 11

A hydrophilic layer was prepared in the same manner as in Example 9, except for changing the catalyst of the sol-gel liquid of the coating solution for first layer to 1.5 g of a 1 N nitric acid aqueous solution (nitric acid catalyst) and changing the drying temperature to 80 °C. With respect to the resulting hydrophilic member, in the abrasion test, the hydrophilic surface was not injured at a load of up to 100 g. In the scratch test, the hydrophilic surface was injured at a load of 80 g.

The undercoat layer had an Si-OH/Si of 0.76 and an Ra of 1.5 nm.

### Example 12

A hydrophilic film was prepared in the same manner as in Example 9, except for eliminating the SNOWTEX C of the coating solution for first layer. The resulting hydrophilic member had a droplet contact angle of not more than 5 degrees and was high in hydrophilicity, In the abrasion test, the hydrophilic surface was not injured at a load of up to 100 g; and in the scratch test, the hydrophilic surface was not injured at a load of up to 70 g.

The undercoat layer had an Si-OH/Si of 0.75 and an Ra of 0.9 nm.

### Example 13

A hydrophilic film was prepared in the same manner as in Example 9, except for changing the SNOWTEX C of the coating solution for first layer to SNOWTEX OXS (particle size: from 4 to 6 nm). The resulting hydrophilic member had a droplet contact angle of not more than 5 degrees and was high in hydrophilicity. In the abrasion test, the hydrophilic surface was not injured at a load of up to 100 g; and in the scratch test, the hydrophilic surface was not injured at a load of up to 90 g.

The undercoat layer had an Si-OH/Si of 0.78 and an Ra of 1.2 nm.

### Example 14

A hydrophilic film was prepared in the same manner as in Example 9, except for changing the SNOWTEX C of the coating solution for first layer to SNOWTEX XL (particle size: from 40 to 60 nm). The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 130 g.

The undercoat layer had an Si-OH/Si of 0.84 and an Ra of 3.4 nm.

### Example 15

A hydrophilic film was prepared in the same manner as in Example 9, except for changing the SNOWTEX C of the coating solution for first layer to SNOWTEX YL (particle size: from 50 to 80 nm). The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 180 g.

The undercoat layer had an Si-OH/Si of 0.90 and an Ra of 10.3 nm.

### Example 16

A hydrophilic layer was prepared in the same manner as in Example 9, except that after coating and drying the first layer, a plasma etching treatment was carried out for 30 seconds. The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 220 g.

The undercoat layer after plasma etching had an Si-OH/Si of 0.91 and an Ra of 21.2 nm.

### Example 17

A hydrophilic layer was prepared in the same manner as in Example 9, except that after coating and drying the first layer, the coated substrate was subjected to an ultrasonic treatment in a washing solution (SEMICOCLEAN 56, manufactured by Furuuchi Chemical Corporation) for 30 seconds. The resulting hydrophilic member had a droplet contact angle of not more than 5 degrees and was high in hydrophilicity. In the abrasion test, the hydrophilic surface was not injured at a load of up to 200 g; and in the scratch test, the hydrophilic surface was not injured at a load of up to 120 g.

The undercoat layer after washing had an Si-OH/Si of 0.82 and an Ra of 0.7 nm.

### Example 18

A hydrophilic layer was prepared in the same manner as in Example 9, except for using a hydrophilic polymer having a silane coupling group in a side chain thereof in place of the hydrophilic polymer having a silane coupling group at a terminal end thereof.

### <Synthesis of hydrophilic polymer having a silane coupling group in a side chain thereof>

A 500-mL three-necked flask was charged with 12.9 g of acrylamide, 11.6 g of acrylamido-3-(ethoxysilyl)propyl and 280 g of 1-methoxy-2-propanol, to which was then added 1.8 g of dimethyl 2,2'-azobis(2-methylpropionate) under a nitrogen gas stream at 80 °C. After keeping at the same temperature for 6 hours while stirring, the mixture was cooled to room temperature. The resulting mixture was thrown into two liters of acetone, and a deposited solid was collected by filtration. The resulting solid was washed with acetone, thereby obtaining a hydrophilic polymer (2). The mass after drying was 22.7 g. As a result of GPC (by using a polyethylene oxide standard solution), the product was confirmed to be a polymer having a mass average molecular weight of 15,000.

### Example 19

A hydrophilic layer was prepared in the same manner as in Example 15, except for using a hydrophilic polymer having a silane coupling group in a side chain thereof in place of the hydrophilic polymer having a silane coupling group at a terminal end thereof.

Evaluation results of the hydrophilic members of Examples 9 to 19 are summarized and shown in the following Table 3.

**Table 3**

| | Contact angle (°) | Abrasion test (g) | Scratch test (g) | Si-OH/Si | Ra (nm) |
|---|---|---|---|---|---|
| Example 9 | 2.5 | 200 | 100 | 0.8 | 1.6 |
| Example 10 | 2.1 | 200 | 150 | 0.88 | 1.6 |
| Example 11 | 2.1 | 100 | 80 | 0.76 | 1.5 |
| Example 12 | 2.1 | 100 | 70 | 0.75 | 0.9 |
| Example 13 | 2.3 | 100 | 90 | 0.78 | 1.2 |
| Example 14 | 2.2 | 200 | 130 | 0.84 | 3.4 |
| Example 15 | 2.2 | 200 | 180 | 0.9 | 10.3 |
| Example 16 | 2.4 | 200 | 220 | 0.91 | 21.2 |
| Example 17 | 2.4 | 200 | 120 | 0.82 | 0.7 |
| Example 18 | 2.1 | 1,000 | 250 | 0.8 | 1.6 |
| Example 19 | 2.1 | 1,000 | 300 | 0.91 | 21.2 |

### Comparative Example 3

A hydrophilic film was prepared in the same manner as in Example 9, except for using only the coating solution for second layer by not using the coating solution for first layer. The resulting hydrophilic member had a droplet contact angle of not more than 5 degrees and was high in hydrophilicity. In the abrasion test, the hydrophilic surface was injured even at a load of 100 g. In the scratch test, the hydrophilic surface was injured at a load of 20 g. Thus, the hydrophilic member was not sufficient in durability. The glass substrate had an Si-OH/Si of 0.26 and an Ra of 0.7 nm.

### Comparative Example 4

A hydrophilic film was prepared in the same manner as in Example 9, except for subjecting the substrate to a plasma etching treatment for 30 seconds without coating the coating solution for first layer. The resulting hydrophilic member had a droplet contact angle of not more than 5 degrees and was high in hydrophilicity. In the abrasion test, the hydrophilic surface was injured even at a load of 100 g. In the scratch test, the hydrophilic surface was injured at a load of 40 g. Thus, the hydrophilic member was not sufficient in durability.

The glass substrate after plasma etching had an Si-OH/Si of 0.31 and an Ra of 19.5 nm.

### Comparative Example 5

A hydrophilic layer was prepared in the same manner as in Example 9, except that after coating the coating solution for first layer, heating at 1,000 °C was carried out, followed by carrying out a plasma etching treatment for 30 seconds. The resulting hydrophilic member had a droplet contact angle of not more than 5 degrees and was high in hydrophilicity. In the abrasion test, the hydrophilic surface was not injured at a load of up to 100 g; and in the scratch test, the hydrophilic surface was not injured at a load of up to 30 g.

The undercoat layer after plasma etching had an Si-OH/Si of 0.35 and an Ra of 18.2 nm.

### Comparative Example 6

A hydrophilic layer was prepared in the same manner as in Example 9, except for changing the catalyst of the sol-gel liquid of the coating solution for first layer to 1.5 g of a 1 N nitric acid aqueous solution (nitric acid catalyst) and changing the drying temperature to 500 °C. With respect to the resulting hydrophilic member, in the abrasion test, the hydrophilic surface was not injured at a load of up to 100 g. In the scratch test, the hydrophilic surface was injured at a load of 30 g.

The undercoat layer had an Si-OH/Si of 0.33 and an Ra of 1.6 nm.

### Comparative Example 7

A hydrophilic layer was prepared in the same manner as in Example 9, except for changing the drying temperature of the coating solution for first layer to 1,000 °C. The resulting hydrophilic member had a droplet contact angle of not more than 5 degrees and was high in hydrophilicity. In the abrasion test, the hydrophilic surface was not injured at a load of up to 100 g; and in the scratch test, the hydrophilic surface was not injured at a load of up to 30 g.

The undercoat layer had an Si-OH/Si of 0.36 and an Ra of 1.5 nm.

Evaluation results of the hydrophilic members of Comparative Examples 3 to 7 are summarized and shown in the following Table 4.

**Table 4**

| | Contact angle | Abrasion test | Scratch test | Si-OH/Si | Ra |
|---|---|---|---|---|---|
| Comparative Example 3 | 2.5° | 100 g | 20g | 0.26 | 0.7 nm |
| Comparative Example 4 | 2.1° | 100 g | 40 g | 0.31 | 19.5 nm |
| Comparative Example 5 | 2.2° | 100 g | 30 g | 0.35 | 18.2 nm |
| Comparative Example 6 | 2,2° | 100 g | 30 g | 0.33 | 1,6 nm |
| Comparative Example 7 | 2.1° | 100 g | 30 g | 0,36 | 1.5 nm |

As is evident from the foregoing results, the hydrophilic member of the invention having an undercoat layer containing a partial structure represented by the formula (1), in which a surface of the undercoat layer has a value of M-OH/M of from 1 to 0.4, between a base material and a hydrophilic layer was excellent in durability of the hydrophilic layer.

Although the invention has been described above in relation to preferred embodiments and modifications thereof, it will be understood by those skilled in the art that other variations and modifications can be effected in these preferred embodiments without departing from the scope and spirit of the invention.

## Claims

1. A hydrophilic member comprising:
a base material;
an undercoat layer comprising a non-volatile catalyst; and
a hydrophilic layer,
in this order.

2. The hydrophilic member according to claim 1, wherein the undercoat layer is a layer obtained by hydrolyzing and polycondensing a composition comprising a metal alkoxide compound selected from Si, Ti, Zr and Al and a non-volatile catalyst.

3. The hydrophilic member according to claim 1 or 2, wherein the hydrophilic layer is a layer obtained by hydrolyzing and polycondensing a composition comprising (a) a hydrophilic polymer, (b) a metal alkoxide compound selected from Si, Ti, Zr and Al and (c) a catalyst capable of hydrolyzing and polycondensing the metal alkoxide compound to cause bonding with the hydrophilic polymer.

4. The hydrophilic member according to claim 3, wherein the hydrophilic polymer (a) is represented by the following formula (I), (II) or (III): 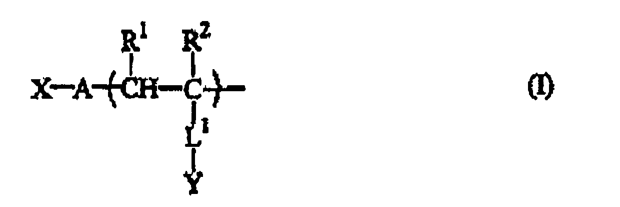 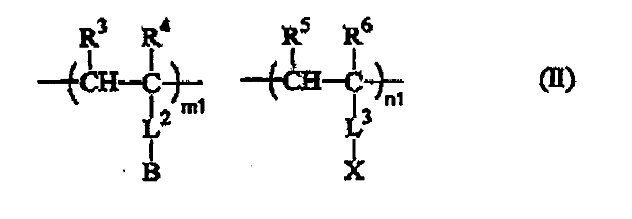 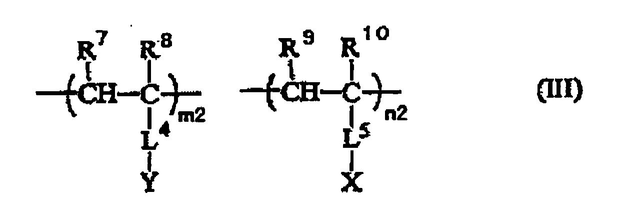 wherein, in the formulae (I) to (III), R¹, R², R³, R⁴, R⁵, R⁶, R⁷, R⁸, R⁹ and R¹⁰ each independently represents a hydrogen atom or a hydrocarbon group; m1, m2, n1 and n2 each represents a molar ratio of monomers, provided that m1 ≥ 5, m2 ≥ 50, (m1 + n1) = 100, and (m2 + n2) = 100; X represents a hydrolyzable silyl group; A, L¹, L², L³, L⁴ and L⁵ each independently represents a single bond or a connecting group; Y represents -NHCOR¹¹, -CONH₂, -CON(R¹¹)₂, -COR¹¹, -O, -CO₂M, -SO₃M, -PO₃M, -OPO₃M or -N(R¹¹)₃Z¹; R¹¹ represents an alkyl group, an aryl group or an aralkyl group each having from 1 to 18 carbon atoms; M represents a hydrogen atom, an alkali metal, an alkaline earth metal or an onium; Z¹ represents a halogen ion; and B represents the following formula (IV): 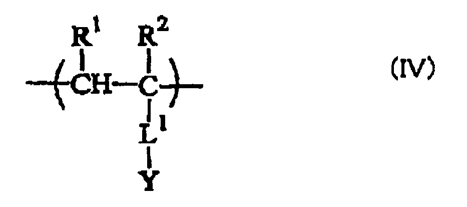 wherein, in the formula (IV), R¹ and R² each independently represents a hydrogen atom or a hydrocarbon group; L¹ represents a single bond or a connecting group; Y represents -NHCOR¹¹, -CONH₂, -CON(R¹¹)₂, -COR¹¹, -O, -CO₂M, -SO₃M, -PO₃M, -OPO₃M or -N(R¹¹)₃Z¹; R¹¹ represents an alkyl group, an aryl group or an aralkyl group each having from 1 to 18 carbon atoms; M represents a hydrogen atom, an alkali metal, an alkaline earth metal or an onium; and Z¹ represents a halogen ion.

5. A substrate for hydrophilic member comprising a base material and an undercoat layer comprising a non-volatile catalyst.

6. The substrate for hydrophilic member according to claim 5, wherein the undercoat layer is a layer obtained by hydrolyzing and polycondensing a composition comprising a metal alkoxide compound selected from Si, Ti, Zr and Al and a non-volatile catalyst.

7. A hydrophilic member comprising:
a base material;
an undercoat layer comprising a partial structure represented by the following formula (1); and
a hydrophilic layer,
in this order,
wherein a surface of the undercoat layer has a value of M-OH/M of from 1 to 0.4:
Formula (1) M-OH
wherein M represents Si, Ti, Zr or Al.

8. The hydrophilic member according to claim 7, wherein a value of M-OH/M on a surface of the base material is smaller than the value of M-OH/M on the surface of the undercoat layer.

9. The hydrophilic member according to claim 7 or 8, wherein the undercoat layer is a layer obtained by hydrolyzing and polycondensing a metal alkoxide compound selected from Si, Ti, Zr and Al.

10. The hydrophilic member according to claim 9, wherein the hydrolysis and polycondensation are carried out at from 30 to 200 °C.

11. The hydrophilic member according to any one of claims 7 to 10, wherein the undercoat layer has a surface roughness (Ra) of from 1.0 to 50 nm.

12. The hydrophilic member according to any one of claims 7 to 11, wherein the undercoat layer is subjected to a plasma etching treatment or incorporated with a particle.

13. The hydrophilic member according to any one of claims 7 to 12, wherein the hydrophilic layer is a layer obtained by hydrolyzing and polycondensing a composition comprising (a) a hydrophilic polymer, (b) a metal alkoxide compound selected from Si, Ti, Zr and Al and (c) a catalyst capable of hydrolyzing and polycondensing the metal alkoxide compound to cause bonding with the hydrophilic polymer.

14. The hydrophilic member according to any one of claims 7 to 13, wherein the base material comprises an Si-OH structure.

15. A substrate for hydrophilic member, comprising a base material and an undercoat layer comprising a partial structure represented by the following formula (1),
wherein a surface of the undercoat layer has a value of M-OH/M of from 1 to 0.4:
Formula (1) M-OH
wherein M represents Si, Ti, Zr or Al.

16. The substrate for hydrophilic member according to claim 15, wherein a value of M-OH/M on a surface of the base material is smaller than the value of M-OH/M on the surface of the undercoat layer.

17. The substrate for hydrophilic member according to claim 15 or 16, wherein the undercoat layer is a layer obtained by hydrolyzing and polycondensing a metal alkoxide compound selected from Si, Ti, Zr and Al.

18. The substrate for hydrophilic member according to claim 17, wherein the hydrolysis and polycondensation are carried out at from 30 to 200 °C.

19. The substrate for hydrophilic member according to any one of claims 15 to 18, wherein the undercoat layer has a surface roughness (Ra) of from 1.0 to 50 nm.

20. The substrate for hydrophilic member according to any one of claims 15 to 19, wherein the undercoat layer is subjected to a plasma etching treatment or incorporated with a particle.

21. The substrate for hydrophilic member according to any one of claims 15 to 20, wherein the base material comprises an Si-OH structure.

22. A process for producing a hydrophilic member comprising:
coating a base material with a composition comprising a metal alkoxide compound selected from Si, Ti, Zr and Al;
heating the composition at from 30 to 200 °C to provide an undercoat layer on the base material; and
providing a hydrophilic layer on the undercoat layer.

23. The process for producing a hydrophilic member according to claim 22, wherein the composition further comprises a catalyst.

24. A process for producing a substrate for hydrophilic member comprising:
coating a base material with a composition comprising a metal alkoxide compound selected from Si, Ti, Zr and Al; and
heating the composition at from 30 to 200 °C to provide an undercoat layer on the base material.

25. The process for producing a substrate for hydrophilic member according to claim 24, wherein the composition further comprises a catalyst.
